# EUROPEAN PATENT APPLICATION

(11) **EP 4 425 018 A1**
(43) Date of publication of application: **04.09.2024**
(21) Application number: 22900368.6
(22) Date of filing: 24.11.2022
(51) Int. Cl.: F16J 15/16, F16J 15/34

(54) **MECHANICAL SEALING DEVICE, FLUID MECHANICAL APPARATUS AND MECHANICAL SEALING METHOD**

(30) Priority: 03.12.2021 CN 202111470118
(71) Applicant: Huawei Digital Power Technologies Co., Ltd., Shenzhen, Guangdong 518043 (CN)
(72) Inventor: LI, Jian, Shenzhen, Guangdong 518043 (CN); LU, Zhiyao, Shenzhen, Guangdong 518043 (CN)
(74) Representative: Maiwald GmbH
(86) International application number: PCT/CN2022/134036
(87) International publication number: WO 2023/098563

(57) **Abstract**

A mechanical sealing apparatus (300), a fluid mechanical device (10), and a mechanical sealing method are provided. The mechanical sealing apparatus (300) includes a static ring (310), a sliding ring (320), a movable ring (330), and a drive structure (340). The sliding ring (320) is disposed inside the static ring (310) or is sleeved outside the static ring (310) in a radial direction of the static ring (310), the sliding ring (320) and the static ring (310) are fastened in a circumferential direction of the static ring (310) and can move relative to each other in an axial direction of the static ring (310), and hardnesses of the static ring (310) and the sliding ring (320) are different. The movable ring (330) is disposed at one end of both of the static ring (310) and the sliding ring (320) in the axial direction. The drive structure (340) is configured to drive the sliding ring (320) to move toward the movable ring (330) in the axial direction. Through disposing of the sliding ring, different sealing surfaces may be formed between the movable ring and both of the sliding ring and the static ring that have different hardnesses, so that the mechanical sealing apparatus, the fluid mechanical device, and the mechanical sealing method are applicable to different fluid environments and improve sealing effect.

## Description

This application claims priority to Chinese Patent Application No. 202111470118.7, filed with the China National Intellectual Property Administration on December 3, 2021 and entitled "MECHANICAL SEALING APPARATUS, FLUID MECHANICAL DEVICE, AND MECHANICAL SEALING METHOD", which is incorporated herein by reference in its entirety.

### TECHNICAL FIELD

This application relates to the field of mechanical sealing technologies, and in particular, to a mechanical sealing apparatus, a fluid mechanical device, and a mechanical sealing method.

### BACKGROUND

In a fluid mechanical device such as a compressor, a steam turbine, a centrifugal pump, a reactor, or the like, there is a shaft that penetrates inside and outside a cavity of the fluid mechanical device, and there is a circumferential gap between the shaft and the cavity. A medium inside and outside the cavity leaks to two sides through the circumferential gap. A mechanical sealing apparatus is configured to be connected between the shaft and the cavity. The mechanical sealing structure includes a movable ring and a static ring that are sleeved on the shaft. The movable ring and the static ring rotate relative to each other to form a sealing surface, and the cavity is kept in a sealed state by using the sealing surface. However, different hardnesses of the movable ring and the static ring affect an application scenario of the mechanical sealing apparatus. Once hardnesses of the movable ring and the static ring in each mechanical sealing apparatus are determined, it is difficult to change the hardnesses subsequently. When a fluid status in the cavity of the fluid mechanical device changes, for example, from a liquid state to a gas-liquid mixing state or from a liquid state to a solid-liquid mixing state, the hardnesses of the movable ring and the static ring cannot simultaneously adapt to different fluid states in the cavity. This damages the mechanical sealing apparatus and affects sealing effect.

### SUMMARY

This application provides a mechanical sealing apparatus. Through disposing of a sliding ring, different sealing surfaces may be formed between a movable ring and both of the sliding ring and a static ring that have different hardnesses, so that the mechanical sealing apparatus can be applicable to different situations.

According to a first aspect, this application provides a mechanical sealing apparatus. The mechanical sealing apparatus includes a static ring, a sliding ring, a movable ring, and a drive structure. The static ring includes a first end surface. The sliding ring includes a second end surface. The sliding ring is disposed inside the static ring or is sleeved outside the static ring in a radial direction of the static ring. The sliding ring and the static ring are fastened in a circumferential direction of the static ring and can move relative to each other in an axial direction of the static ring. Hardnesses of the static ring and the sliding ring are different. The movable ring is disposed at one end of both of the static ring and the sliding ring in the axial direction. The movable ring elastically presses against the first end surface or the second end surface in the axial direction. The drive structure is configured to drive the second end surface to move toward the movable ring in the axial direction, to form a sealing surface between the second end surface and the movable ring and form a gap between the first end surface and the movable ring. When the drive structure releases a driving force on the second end surface toward the movable ring, the first end surface and the movable ring press against each other to form a sealing surface.

An axial direction of the static ring, the sliding ring, and the movable ring is a first direction, an end surface that is of the static ring and that is close to the movable ring in the first direction is the first end surface, and an end surface that is of the sliding ring and that is close to the movable ring in the first direction is the second end surface. In an implementation, the static ring is fastened in the first direction, and the sliding ring may slide in the first direction, so that the sliding ring and the static ring slide relative to each other in the first direction.

The elastically pressing against means that the movable ring has an elastic force on the first end surface or the second end surface, so that the movable ring presses against the first end surface or the second end surface. In an implementation, the mechanical sealing apparatus further includes an elastic member. The elastic member is disposed coaxial with the movable ring in the first direction, and is located at one end that is of the movable ring and that is away from the static ring. Through disposing of the elastic member, the movable ring elastically presses against the first end surface or the second end surface in the axial direction. In an implementation, the elastic member is a spring. In an implementation, the elastic member is a dome or an elastic body.

In an implementation, the mechanical sealing apparatus further includes a movable ring support. The movable ring support sleeve is disposed coaxial with the movable ring. The elastic member, the movable ring support, and the movable ring are disposed in the first direction. The movable ring support is fixedly connected to or presses against the movable ring, the movable ring support is fixedly connected to or presses against the elastic member, and the movable ring support fits the elastic member, so that the movable ring is more closely attached to the first end surface or the second end surface. A specific shape of the movable ring support may be set based on structures and sizes of the movable ring and the elastic member. In an implementation, the elastic member may be directly fixedly connected to or press against the movable ring.

Through disposing of the sliding ring, different sealing surfaces may be formed between the movable ring and both of the sliding ring and the static ring that have different hardnesses, and the different sealing surfaces are applicable to different fluid environments, so that the mechanical sealing apparatus can adapt to the different fluid environments, a use range of the mechanical sealing apparatus is expanded, sealing effect of the mechanical sealing apparatus is improved, and a service life of the mechanical sealing apparatus is prolonged.

In a possible implementation, a hardness of one of the static ring and the sliding ring is a first hardness, a hardness of the other of the static ring and the sliding ring is a second hardness, the first hardness is less than the second hardness, and a hardness of the movable ring is greater than or equal to the first hardness. In an implementation, the hardness of the movable ring is less than the first hardness.

In a possible implementation, the hardness of the static ring is the first hardness, and the hardness of the sliding ring is the second hardness. In an implementation, the hardness of the movable ring is greater than the hardness of the static ring. In an implementation, the hardness of the movable ring is further greater than the hardness of the sliding ring. In an implementation, the hardness of the movable ring may be less than the hardness of the sliding ring and greater than the hardness of the static ring. In an implementation, the hardness of the movable ring may be less than the hardness of the sliding ring and less than the hardness of the static ring. In an implementation, a material of the static ring 310 is graphite, a material of the sliding ring 320 is silicon carbide, and a hardness of graphite is less than a hardness of silicon carbide.

When fluid is liquid, a fluid status includes a first state, a second state, and a third state. The first state is that gas content in the fluid is greater than or equal to a first preset value, and solid content in the fluid is less than a second preset value. The second state is that the solid content in the fluid is greater than or equal to the second preset value, and the gas content in the fluid is less than the first preset value. The third state is that the gas content in the fluid is less than the first preset value, and the solid content in the fluid is less than the second preset value. The first preset value and the second preset value may be set based on hardnesses or sizes of the sliding ring, the static ring, and the movable ring, or may be set based on an actual requirement.

When the hardness of the sliding ring is greater than the hardness of the static ring, and the fluid is in the second state, the drive structure drives the sliding ring to move toward the movable ring, so that the sliding ring is closely attached to the movable ring to form a second sealing surface, and a gap is formed between the movable ring and the first end surface of the static ring. Because the hardness of the sliding ring is greater than the hardness of the static ring, and a hardness of a material of the second sealing surface is large, the mechanical sealing apparatus is unlikely be worn by a solid, and the service life of the mechanical sealing apparatus can be prolonged.

When the fluid is in the first state, the drive structure releases a driving force on the sliding ring toward the movable ring, and under an action of the elastic member, the movable ring presses against the static ring in the first direction and is closely attached to the static ring to form a first sealing surface, and no additional driving force is on the sliding ring toward the movable ring to closely attach the second end surface to the movable ring. Because the hardness of the static ring is less than the hardness of the sliding ring, the mechanical sealing apparatus is unlikely to generate a large amount of heat and burn out, and the service life of the mechanical sealing apparatus is prolonged.

When the fluid is in the third state, the first sealing surface formed by the movable ring and the static ring or the second sealing surface formed by the movable ring and the sliding ring can achieve mechanical sealing effect.

In a possible implementation, the hardness of the static ring is the second hardness, and the hardness of the sliding ring is the first hardness. In an implementation, a material of the sliding ring is graphite, a material of the static ring is silicon carbide, and a hardness of graphite is less than a hardness of silicon carbide.

In an implementation, materials of the sliding ring, the static ring, and the movable ring are selected from phenolic plastic, nylon, polytetrafluoroethylene, graphite impregnated with resin, rubber, ceramic, surfacing cemented carbide, a tungsten carbide alloy, tin bronze, steel-bonded cemented carbide, stainless steel, graphite, and silicon carbide. The hardness difference among the sliding ring, the static ring, and the movable ring may be adjusted based on the fluid or an actual requirement. For example, in an implementation, the second hardness and the first hardness are on a Mohs hardness scale, and a level of the second hardness is at least one level higher than a level of the first hardness. In an implementation, the second hardness and the first hardness are on a Mohs hardness scale, and a level of the second hardness is two levels higher than a level of the first hardness. In an implementation, the second hardness and the first hardness are on a Rockwell Hardness A scale (HRA). The second hardness is 80 HRA to 90 HRA, and the first hardness is 55 HRA to 70 HRA. In an implementation, the second hardness and the first hardness are on a Rockwell Hardness A scale (HRA). A value of the second hardness is at least 10 HRA greater than a value of the first hardness. In an implementation, the second hardness and the first hardness are on a Rockwell Hardness A scale (HRA). A value of the second hardness is 20 HRA greater than a value of the first hardness.

In an implementation, the mechanical sealing apparatus includes a plurality of sliding rings that have different hardnesses, and the drive structure may separately drive the sliding rings to move toward the movable ring, so that each sliding ring may be closely attached to the movable ring to form a sealing surface. In an implementation, the drive structure simultaneously drives at least two of the sliding rings to move toward the movable ring, so that the at least two of the sliding rings are simultaneously closely attached to the movable ring to form sealing surfaces. The plurality of sliding rings may be disposed to further expand an application scenario and a use range of the mechanical sealing apparatus.

In a possible implementation, the drive structure presses against or is fixedly connected to one end that is of the sliding ring and that is away from the movable ring. In an implementation, the drive structure presses against the sliding ring. A manner in which the drive structure releases the driving force on the sliding ring toward the movable ring includes moving the drive structure in a direction away from the movable ring. When the drive structure releases the driving force on the sliding ring toward the movable ring, an elastic force of the elastic member on the movable ring pushes the sliding ring to move in the direction away from the movable ring until the movable ring presses against the static ring and the movable ring cannot continue to move in the first direction. The drive structure continues to move in the direction away from the movable ring until the movable ring cannot be closely attached to the sliding ring. In this case, the movable ring rotates about the static ring and elastically presses against the first end surface, and the first end surface of the static ring and the movable ring form a sealing surface denoted as the first sealing surface. When the drive structure releases the driving force, and the movable ring presses against the static ring, the drive structure continues to move away from the movable ring in the first direction, so that a distance between an end surface that is of the drive structure and that faces the sliding ring and an end surface that is of the movable ring and that faces the sliding ring is greater than a length of the sliding ring in the first direction, and the sliding ring may be located at any position between the drive structure and the sliding ring. In this case, even if the second end surface of the sliding ring is in contact with the movable ring, because no additional acting force is on the sliding ring toward the movable ring, the second end surface and the movable ring cannot be closely attached to form an effective sealing surface. In this case, the mechanical sealing apparatus implements sealing by using the first sealing surface.

In an implementation, the drive structure is fixedly connected to the sliding ring. When the drive structure releases the driving force on the sliding ring toward the movable ring, the drive structure moves away from the movable ring in the first direction, and the drive structure drives the sliding ring to move in the direction away from the movable ring. A gap is formed between the movable ring and the second end surface, so that the mechanical sealing apparatus can respond to an environment change faster, and better adapt to an environment change of the fluid.

In a possible implementation, when the drive structure releases the driving force on the second end surface toward the movable ring, the first end surface is aligned with the second end surface. If the first end surface is not aligned with the second end surface, a process design is complex, and when the drive structure drives the second end surface to move, the second end surface needs to move for an additional distance to press against the movable ring, or when the elastic member enables the movable ring to press against the first end surface, the movable ring needs to move for an additional distance. This increases a loss of the mechanical sealing apparatus. However, the first end surface is aligned with the second end surface. This design can reduce process processing difficulty, increase operating efficiency of the mechanical sealing apparatus, and reduce an operating loss. In addition, an end surface that is of the movable ring and that is close to the static ring and the sliding ring is a flat surface, so that attaching precision between the movable ring and the first end surface or the second end surface is high.

In a possible implementation, the static ring is sleeved on an outer circumferential side of the sliding ring. The sliding ring needs to move away from or close to the movable ring in the first direction, and the sliding ring is located inside the static ring. A size of the sliding ring may be set to be small, so that a friction force between the sliding ring and the static ring is small, and the drive structure may easily push the sliding ring to slide in the first direction.

In a possible implementation, the static ring is sleeved on an outer circumferential side of the sliding ring, the mechanical sealing apparatus further includes a static ring support, and the static ring support is configured to fasten the static ring to an outer circumferential surface of the static ring.

In a possible implementation, the static ring support includes a circumferential surface support part and an end surface support part that are connected to each other, the end surface support part is located at one end of the circumferential surface support part, the circumferential surface support part is configured to fasten the static ring to an outer circumferential side of the static ring, the end surface support part covers an end surface that is of the static ring and that is away from the movable ring, and exposes at least a part of an end surface that is of the sliding ring and that is away from the movable ring, and the drive structure is located on an inner circumferential side of the end surface support part, and presses against or is fixedly connected to the end surface that is of the sliding ring and that is away from the movable ring, to drive the sliding ring to move toward the movable ring in the axial direction.

In an implementation, the entire end surface that is of the sliding ring and that is away from the movable ring is not covered by the end surface support part, and the drive structure presses against or is fixedly connected to the end surface that is of the sliding ring and that is away from the movable ring. In an implementation, a part of the end surface that is of the sliding ring and that is away from the movable ring is covered by the end surface support part, and a part of the end surface that is of the sliding ring and that is away from the movable ring is exposed. A structure of the drive structure presses against or is fixedly connected to the exposed part of the end surface of the sliding ring.

In an implementation, the end surface support part is provided with a through hole that penetrates the end surface support part, and exposes at least a part of the end surface that is of the sliding ring and that is away from the movable ring, and the drive structure passes through the through hole, and presses against or is fixedly connected to the end surface that is of the sliding ring and that is away from the movable ring. The outer circumferential side of the static ring and an end surface that is of the static ring and that is away from the movable ring are both covered by the static ring support, so that the static ring is fastened in both the radial direction and the axial direction. This improves stability of the static ring. The part of the end surface that is of the sliding ring and that is away from the movable ring is covered by the end surface support part, and a gap is formed between the part of the end surface that is of the sliding ring and that is away from the movable ring and the end surface support part, so that the sliding ring is limited between the movable ring and the end surface support part, to avoid that the sliding ring is detached from the mechanical sealing apparatus in the first direction and thus reduces sealing effect of the mechanical sealing apparatus and causes the mechanical sealing apparatus not to be applicable to a plurality of scenarios. In an implementation, a plurality of through holes may be disposed, so that the drive structure has a sufficient driving force to drive the sliding ring to move.

In a possible implementation, an inner surface of the end surface support part is in a threaded connection to an outer surface of the drive structure. A thread is disposed on a surface that is of the end surface support part and that is in contact with the drive structure, and a matching thread is also disposed on a surface that is of the drive structure and that is in contact with the end surface support part. The thread of the end surface support part fits the thread of the drive structure, so that the drive structure implements movement in the first direction through rotation. The end surface support part is in the threaded connection to the drive structure, so that movement of the drive structure can be controlled with higher precision. This improves the sealing effect of the mechanical sealing apparatus.

In a possible implementation, the sliding ring is sleeved on the outer circumferential side of the static ring.

In a possible implementation, the mechanical sealing apparatus further includes a static ring support, the static ring support includes a circumferential surface support part and an end surface support part that are connected to each other, the end surface support part is located at one end of the circumferential surface support part, the circumferential surface support part is located on an outer circumferential side of the sliding ring, the end surface support part is configured to fasten the static ring to an end surface that is of the static ring and that is away from the movable ring, the end surface support part is provided with a through hole that penetrates the end surface support part, and exposes at least a part of an end surface that is of the sliding ring and that is away from the movable ring, and the drive structure passes through the through hole, and presses against or is fixedly connected to the end surface that is of the sliding ring and that is away from the movable ring, to drive the sliding ring to move toward the movable ring in the axial direction.

In an implementation, the static ring is fixedly connected to the end surface support part, and the sliding ring and the circumferential surface support part may slide relative to each other. In an implementation, the end surface support part is provided with a plurality of through holes, and the drive structure passes through the plurality of through holes and presses against or is fixedly connected to the sliding ring, so that the drive structure has a sufficient driving force to drive the sliding ring to move. In an implementation, a thread is disposed on an outer surface that is of the drive structure and that is in contact with the through hole, a thread is disposed on an inner surface that is of the through hole and that is in contact with the drive structure, and the drive structure is in a threaded connection to the through hole, so that movement of the drive structure can be controlled with higher precision. The sliding ring is limited between the circumferential surface support part and the static ring, and the sliding ring is limited between the end surface support part and the movable ring, so that overall stability of the mechanical sealing apparatus is improved, and sealing effect can be better achieved.

In a possible implementation, a first sealing ring is disposed between the static ring and the sliding ring. The first sealing ring seals the gap between the static ring and the sliding ring, to prevent the fluid from leaking from the gap between the static ring and the sliding ring, and the first sealing ring can improve sealing performance of the mechanical sealing apparatus. The first sealing ring is an elastic sealing ring, and may be a rubber ring.

In an implementation, the sliding ring is sleeved on the outer circumferential side of the static ring, a second sealing ring is disposed between the sliding ring and the static ring support, the second sealing ring seals the gap between the sliding ring and the static ring support, to prevent the fluid from leaking from the gap between the sliding ring and the static ring support, and the second sealing ring can improve the sealing performance of the mechanical sealing apparatus.

In an implementation, the static ring is sleeved on the outer circumferential side of the sliding ring, a second sealing ring is disposed between the static ring and the static ring support, the second sealing ring seals the gap between the static ring and the static ring support, to prevent the fluid from leaking from the gap between the static ring and the static ring support, and the second sealing ring can improve the sealing performance of the mechanical sealing apparatus.

In a possible implementation, the drive structure includes a drive motor and a sliding ring adjustment rod, the sliding ring adjustment rod is located at one end that is of the sliding ring and that is away from the movable ring, and the drive motor is configured to drive the sliding ring adjustment rod to move in the axial direction, to drive the sliding ring to move toward the movable ring in the axial direction.

In an implementation, an extension direction of the sliding ring adjustment rod is the first direction, the extension direction of the sliding ring adjustment rod is consistent with an axial direction of the sliding ring, and a driving force of the sliding ring adjustment rod directly acts on the sliding ring, so that the sliding ring may be better driven to move. In an implementation, the extension direction of the sliding ring adjustment rod and the axial direction of the sliding ring are disposed in an included angle, so that a size of the mechanical sealing apparatus in the first direction can be reduced.

In an implementation, the extension direction of the sliding ring adjustment rod and the axial direction of the sliding ring are disposed in an included angle, where a value of the included angle is greater than 0 degrees and is less than or equal to 90 degrees. The sliding ring is sleeved on the outer circumferential side of the static ring. The circumferential surface support part is provided with a groove. The sliding ring adjustment rod presses against or is fixedly connected to the sliding ring through the groove. The sliding ring is limited between the end surface support part and the movable ring. In addition, a clearance is reserved between the end surface support part and the movable ring, so that the sliding ring may move between the end surface support part and the movable ring, and the sliding ring adjustment rod may drive the sliding ring to move in the groove in the first direction or away from the first direction.

In an implementation, the extension direction of the sliding ring adjustment rod and the axial direction of the sliding ring are disposed in an included angle, where a value of the included angle is greater than 0 degrees and is less than or equal to 90 degrees. The static ring is sleeved on the outer circumferential side of the sliding ring. The circumferential surface support part and the static ring are provided with a groove. The sliding ring adjustment rod presses against, is clamped to, or is fixedly connected to a circumferential side of the sliding ring through the groove. The end surface support part and the movable ring limit the sliding ring between the end surface support part and the movable ring, and reserve a clearance for the sliding ring to move between the end surface support part and the movable ring. The sliding ring adjustment rod may drive the sliding ring to move in the groove in the first direction or away from the first direction, and a size of the groove in the first direction is greater than a size of the sliding ring adjustment rod in the first direction, so that the sliding ring adjustment rod may move in the groove in the first direction.

In a possible implementation, the sliding ring adjustment rod is of a hollow structure and is disposed coaxial with the sliding ring, an inner diameter of the sliding ring adjustment rod is greater than or equal to an inner diameter of the sliding ring, and an outer diameter of the sliding ring adjustment rod is less than or equal to an outer diameter of the sliding ring.

In an implementation, the static ring is sleeved on an outer circumferential side of the sliding ring, the sliding ring adjustment rod presses against or is fixedly connected to an end surface that is of the sliding ring and that is away from the movable ring, and the outer diameter of the sliding ring adjustment rod is less than or equal to the outer diameter of the sliding ring, so that in a process in which the sliding ring adjustment rod drives the sliding ring to move, friction between the sliding ring adjustment rod and the static ring is reduced, efficiency of the drive motor is improved, and an energy loss is reduced.

In an implementation, the outer diameter of the sliding ring adjustment rod is equal to the outer diameter of the sliding ring, the inner diameter of the sliding ring adjustment rod is equal to the inner diameter of the sliding ring, the end surface that is of the sliding ring and that is away from the movable ring is covered by the sliding ring adjustment rod, two ends of the sliding ring in the first direction are limited between the movable ring and the sliding ring adjustment rod, and a contact area between the sliding ring adjustment rod and the sliding ring is large, in other words, an action force area between the sliding ring adjustment rod and the sliding ring is large. This is more conducive to driving movement of the sliding ring.

In an implementation, the sliding ring adjustment rod is of a cylindrical structure, the sliding ring adjustment rod presses against or is fixedly connected to a part of the end surface that is of the sliding ring and that is away from the movable ring, the sliding ring adjustment rod is parallel to the first direction, and a diameter of the sliding ring adjustment rod is less than or equal to a difference between the outer diameter and the inner diameter of the sliding ring, so that the sliding ring adjustment rod is unlikely to be blocked by the static ring and have difficulty in continuing moving in a process of driving the sliding ring. In order that the sliding ring adjustment rod can more effectively drive the sliding ring to move, a plurality of sliding ring adjustment rods may be disposed.

In an implementation, the sliding ring adjustment rod presses against, is clamped to, or is fixedly connected to the circumferential side of the sliding ring, and the diameter of the sliding ring adjustment rod may be set based on an actual requirement, to provide a more effective driving force.

In a possible implementation, the mechanical sealing apparatus further includes a detection apparatus and a controller, the detection apparatus is configured to detect a fluid status, and the controller controls, based on the fluid status, the drive structure to drive the second end surface of the sliding ring to move toward the movable ring in the axial direction or to release the driving force on the second end surface toward the movable ring.

In an implementation, the detection apparatus is a refractometer, and a refractive index of the fluid is detected to distinguish whether a status of the fluid is a first state, a second state, or a third state. Detected status information of the fluid is fed back to the controller, and the controller controls movement of the drive structure after identifying the information. In an implementation, the detection apparatus is a density analyzer, and a density of the fluid is detected to distinguish whether a status of the fluid is a first state, a second state, or a third state. In another implementation, the detection apparatus may alternatively be an infrared detection apparatus, a sensor, or the like, provided that the first state, the second state, or the third state of the liquid can be detected.

According to a second aspect, this application provides a fluid mechanical device. The fluid mechanical device includes a fluid cavity, a shaft, and the mechanical sealing apparatus according to any one of the foregoing implementations. The fluid cavity is configured to accommodate a fluid. The shaft is installed in the fluid cavity and extends to an outside of the fluid cavity. The movable ring, the static ring, and the sliding ring are sleeved on the shaft. The movable ring is located in the fluid cavity. The mechanical sealing apparatus implements sealing between an inside of the fluid cavity and the outside of the fluid cavity by using the sealing surface.

The fluid mechanical device further includes a housing. The fluid cavity is located in internal space of the housing. The shaft is installed in the fluid cavity and extends through the housing to the outside of the fluid cavity. In an implementation, one end of the shaft extends through the housing to an outside of the housing, and the other end of the shaft is located in the fluid cavity. In an implementation, both ends of the shaft extend through the housing to the outside of the housing. In this case, there are two junctions between the shaft and the housing, and the mechanical sealing apparatuses are disposed at the two junctions between the shaft and the housing respectively.

The mechanical sealing apparatus is located at the junction between the shaft and the housing, and is configured to isolate an internal environment from an external environment of the fluid cavity. A cross section of the housing may be a circle, an ellipse, a polygon, or the like, and a specific shape of the housing is set based on an actual application scenario.

The mechanical sealing apparatus is used to implement sealing between an inside of the fluid cavity and the outside of the fluid cavity of the fluid mechanical device. The mechanical sealing apparatus can prevent the fluid in the fluid cavity from leaking to the outside of the fluid cavity through the junction between the shaft and the housing, and avoid causing a fluid loss and damaging an external element. In addition, the mechanical sealing apparatus can prevent air and liquid outside the housing from entering the fluid cavity, and avoid polluting the fluid in the fluid cavity or damaging a device in the fluid cavity. Furthermore, when the fluid mechanical device is used, the fluid status in the fluid cavity may be different. For example, the fluid may include a solid impurity or bubble. The mechanical sealing apparatus may implement sealing between the inside of the fluid cavity and the outside of the fluid cavity by using the sealing surface formed by the sliding ring and the movable ring or by using the sealing surface formed by the static ring and the movable ring based on different states of the fluid, to prolong the service life of the mechanical sealing apparatus.

In an implementation, the movable ring, the static ring, and the sliding ring are sleeved on the shaft, the movable ring is located in the fluid cavity, the movable ring is fastened to the shaft and may rotate with the shaft, the static ring and the sliding ring do not rotate with the shaft, and when the shaft rotates, the shaft rotates to drive the movable ring to rotate, and the movable ring rotates relative to the static ring and the sliding ring.

In an implementation, the elastic member and the movable ring support are sleeved on the shaft. In an implementation, the sliding ring adjustment rod is disposed on an outer circumferential side of the shaft, or the sliding ring adjustment rod is sleeved on the shaft.

In a possible implementation, the fluid mechanical device further includes an impeller and a motor, the impeller is located in the fluid cavity and is fixedly connected to the shaft, the motor is located outside the fluid cavity and is connected to the shaft, the motor is configured to drive the shaft to rotate, and the shaft rotates to drive the impeller to rotate.

In a possible implementation, the fluid mechanical device is a pump, a centrifuge, a reactor, or a compressor.

When the mechanical sealing apparatus is used in the pump, the fluid in the fluid cavity is water, and the impeller rotates to drive the water to enter and leave the fluid cavity. The fluid cavity includes an inlet and an outlet, water enters the fluid cavity from the inlet in the first direction, and is transmitted from the outlet in a second direction to the outside of the fluid cavity, and the second direction is perpendicular to the first direction. The static ring is sleeved on the outer circumferential side of the sliding ring, and the static ring is fixedly connected to an inner surface of the housing.

In an implementation, the fluid mechanical device is the pump, and the detection apparatus is located on a side of an inlet of the pump, and is configured to detect a status of the fluid entering the fluid cavity from the inlet. In an implementation, the detection apparatus is located on a side of an outlet of the pump, and is configured to detect a status of the fluid flowing out of the fluid cavity from the outlet.

Through disposing of the sliding ring, the pump enables the mechanical sealing apparatus to form different sealing surfaces to adapt to different water states and to prevent the water from leaking to the outside of the fluid cavity through the junction between the shaft and the housing. This can avoid reducing operating efficiency of the pump, prevent the water from leaking to the motor and causing damage and corrosion to the motor. In addition, the service life of the mechanical sealing apparatus can be prolonged, and sealing reliability of the pump can be ensured.

According to a third aspect, this application provides a mechanical sealing method, applied to the fluid mechanical device according to any one of the foregoing implementations, where the mechanical sealing method includes:
obtaining a fluid status in the fluid cavity; and
controlling, based on the fluid status, the drive structure to drive the second end surface of the sliding ring to move toward the movable ring in the axial direction or to release the driving force on the second end surface toward the movable ring.

In a possible implementation, when the hardness of the sliding ring is the first hardness, and the hardness of the static ring is the second hardness, the controlling, based on the fluid status, the drive structure to drive the second end surface of the sliding ring to move toward the movable ring in the axial direction or to release the driving force on the second end surface toward the movable ring includes:
determining whether the fluid status is the first state, where the first state is that gas content in the fluid is greater than or equal to the first preset value, and solid content in the fluid is less than the second preset value; and
when the fluid status is the first state, controlling the drive structure to drive the second end surface of the sliding ring to move toward the movable ring in the axial direction, to form the sealing surface between the second end surface and the movable ring and form the gap between the first end surface and the movable ring.

In an implementation, the controlling, based on the fluid status, the drive structure to drive the second end surface of the sliding ring to move toward the movable ring in the axial direction or to release the driving force on the second end surface toward the movable ring further includes:
when the fluid status is not the first state, determining whether the fluid status is the second state;
when the fluid status is the second state, controlling the drive structure to release the driving force on the second end surface toward the movable ring, to form the sealing surface between the first end surface and the movable ring and implement mechanical sealing by using the sealing surface formed by the first end surface and the movable ring; and
when the fluid status is neither the first state nor the second state, the drive structure does not operate.

In a possible implementation, when the hardness of the sliding ring is the second hardness, and the hardness of the static ring is the first hardness, the controlling, based on the fluid status, the drive structure to drive the second end surface of the sliding ring to move toward the movable ring in the axial direction or to release the driving force on the second end surface toward the movable ring includes:
determining whether the fluid status is the first state; and
when the fluid status is the first state, controlling the drive structure to release the driving force on the second end surface toward the movable ring, to form the sealing surface between the first end surface and the movable ring.

In an implementation, the controlling, based on the fluid status, the drive structure to drive the second end surface of the sliding ring to move toward the movable ring in the axial direction or to release the driving force on the second end surface toward the movable ring further includes:
when the fluid status is not the first state, determining whether the fluid status is the second state;
when the fluid status is the second state, controlling the drive structure to drive the second end surface of the sliding ring to move toward the movable ring in the axial direction, to form the sealing surface between the second end surface and the movable ring and form the gap between the first end surface and the movable ring; and
when the fluid status is neither the first state nor the second state, the fluid status is the third state, and the drive structure does not operate. That the drive structure does not operate means that the drive structure maintains an original state and does not further operate.

In this application, through disposing of the sliding ring, different sealing surfaces may be formed between the movable ring and both of the sliding ring and the static ring that have different hardnesses, and the different sealing surfaces are applicable to different fluid environments, so that the mechanical sealing apparatus can adapt to the different fluid environments, the use range of the mechanical sealing apparatus is expanded, the sealing effect of the mechanical sealing apparatus is improved, and a function and safety performance of the fluid mechanical device are improved.

### BRIEF DESCRIPTION OF DRAWINGS

To describe technical solutions in embodiments of this application more clearly, the following describes the accompanying drawings used in embodiments of this application.
FIG. 1 is a schematic diagram of a structure a fluid mechanical device according to an embodiment of this application;
FIG. 2 is a schematic diagram of a structure a fluid mechanical device according to an embodiment of this application;
FIG. 3 is a sectional view of a structure of a mechanical sealing apparatus according to an embodiment of this application;
FIG. 4 is a sectional view of a part of a fluid mechanical device according to an embodiment of this application;
FIG. 5 is a sectional view of a part of a fluid mechanical device according to an embodiment of this application;
FIG. 6 is a sectional view of a part of a fluid mechanical device according to an embodiment of this application;
FIG. 7 is a schematic diagram of a structure of a pump according to an embodiment of this application;
FIG. 8 is a sectional view of a structure of a mechanical sealing apparatus according to an embodiment of this application;
FIG. 9 is a sectional view of a structure of a mechanical sealing apparatus according to an embodiment of this application;
FIG. 10 is a sectional view of a structure of a mechanical sealing apparatus according to an embodiment of this application;
FIG. 11 is an enlarged diagram of a part of an M part in FIG. 3;
FIG. 12 is a sectional view of a structure of a mechanical sealing apparatus according to an embodiment of this application;
FIG. 13 is a sectional view of a structure of a mechanical sealing apparatus according to an embodiment of this application;
FIG. 14 is a sectional view of a structure of a mechanical sealing apparatus according to an embodiment of this application;
FIG. 15 is a sectional view of a structure of a mechanical sealing apparatus according to an embodiment of this application;
FIG. 16 is a sectional view of a structure of a mechanical sealing apparatus according to an embodiment of this application;
FIG. 17 is a flowchart of a mechanical sealing method according to an embodiment of this application;
FIG. 18 is a flowchart of a mechanical sealing method according to an embodiment of this application; and
FIG. 19 is a flowchart of a mechanical sealing method according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this specification, terms "first", "second", and the like are merely intended for a purpose of description, and shall not be understood as an indication or implication of relative importance or implicit indication of a quantity of indicated technical features. Therefore, a feature defined with "first" or "second" may explicitly or implicitly include one or more features. In description of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change based on changes in the positions of the structures.

This application provides a mechanical sealing apparatus. The mechanical sealing apparatus includes a static ring, a sliding ring, a movable ring, and a drive structure. The sliding ring is disposed inside the static ring or is sleeved outside the static ring in a radial direction of the static ring. The sliding ring and the static ring are fastened in a circumferential direction of the static ring and can move relative to each other in an axial direction of the static ring. Hardnesses of the static ring and the sliding ring are different. The movable ring is disposed at one end of both of the static ring and the sliding ring in the axial direction. The drive structure is configured to drive the sliding ring to move toward the movable ring in the axial direction, to form a sealing surface between the sliding ring and the movable ring and form a gap between the static ring and the movable ring. When the drive structure releases a driving force on the static ring toward the movable ring, the static ring and the movable ring press against each other to form a sealing surface. The mechanical sealing apparatus achieves sealing effect by using the sealing surface formed by the sliding ring and the movable ring or the sealing surface formed by the static ring and the movable ring, and may be used in different fluid states. This prolongs a service life of the mechanical sealing apparatus.

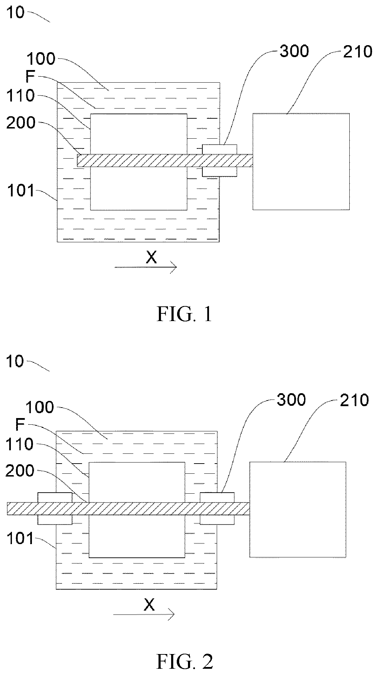

Refer to FIG. 1. An embodiment of this application provides a fluid mechanical device 10. The fluid mechanical device 10 includes a fluid cavity 100, a shaft 200, and a mechanical sealing apparatus 300. The fluid cavity 100 is configured to accommodate a fluid F, and the shaft 200 is installed in the fluid cavity 100 and extends to an outside of the fluid cavity 100. The fluid mechanical device 10 further includes a housing 101. The fluid cavity 100 is located in internal space of the housing 101. The shaft 200 is installed in the fluid cavity 100 and extends through the housing 101 to the outside of the fluid cavity 100. In this implementation, one end of the shaft 200 extends through the housing 101 to an outside of the housing (as shown in FIG. 1), and the other end of the shaft 200 is located in the fluid cavity 100. In an implementation, both ends of the shaft 200 extend through the housing 101 to the outside of the housing (as shown in FIG. 2). In this case, there are two junctions between the shaft 200 and the housing 101, and the mechanical sealing apparatuses 300 are disposed at the two junctions between the shaft 200 and the housing 101 respectively.

The mechanical sealing apparatus 300 is located at the junction between the shaft 200 and the housing 101, and is configured to isolate an internal environment from an external environment of the fluid cavity 100. A cross section of the housing 101 may be a circle, an ellipse, a polygon, or the like, and a specific shape of the housing 101 is set based on an actual application scenario.

In this implementation, the movable ring, the static ring, and the sliding ring of the mechanical sealing apparatus 300 are sleeved on the shaft 200, the movable ring is located in the fluid cavity 100, and the mechanical sealing apparatus 300 implements sealing between an inside of the fluid cavity 100 and the outside of the fluid cavity 100 by using the sealing surface formed by the sliding ring and the movable ring or the sealing surface formed by the static ring and the movable ring.

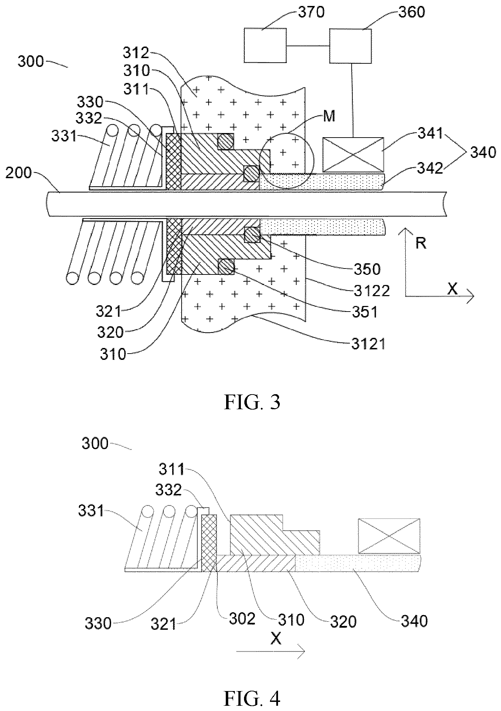

In this application, the mechanical sealing apparatus 300 is used to implement sealing between the inside of the fluid cavity 100 and the outside of the fluid cavity 100 of the fluid mechanical device 10. The mechanical sealing apparatus 300 can prevent the fluid F in the fluid cavity 100 from leaking to the outside of the fluid cavity 100 through the junction between the shaft 200 and the housing 101, and avoid causing a loss of the fluid F and damaging to an external element. In addition, the mechanical sealing apparatus 300 can prevent air and liquid outside the housing 101 from entering the fluid cavity 100, and avoid polluting the fluid F in the fluid cavity 100 or damaging a device in the fluid cavity 100. Furthermore, as shown in FIG. 3, when the fluid mechanical device 10 is used, a fluid status in the fluid cavity 100 may be different. For example, the fluid F includes a solid impurity or bubble. The mechanical sealing apparatus 300 may implement sealing between the inside of the fluid cavity 100 and the outside of the fluid cavity 100 by using the sealing surface formed by the sliding ring 320 and the movable ring 330 or by using the sealing surface formed by the static ring 310 and the movable ring 330 based on different fluid states, to prolong a service life of the mechanical sealing apparatus 300.

In a possible implementation, the fluid mechanical device 10 further includes an impeller 110 and a motor 210 (as shown in FIG. 1). The impeller 110 is located in the fluid cavity 100 and is fixedly connected to the shaft 200. The motor 210 is located outside the fluid cavity 100 and is connected to the shaft 200. The motor 210 is configured to drive the shaft 200 to rotate, and the shaft 200 rotates to drive the impeller 110 to rotate. Structures of the impeller 110 and the motor 210 are not limited to the structure shown in FIG. 1, and may be specifically set based on an actual requirement.

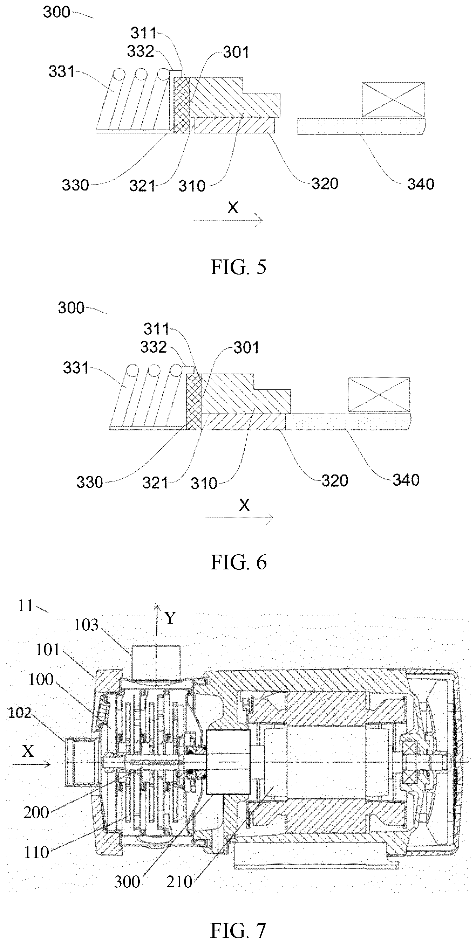

In a possible implementation, the fluid mechanical device 10 is one of a pump 11 (as shown in FIG. 7), a centrifuge, a reactor, or a compressor.

The following describes in detail the mechanical sealing apparatus 300 in this application.

Refer to FIG. 3. An embodiment of this application provides a mechanical sealing apparatus 300, including a static ring 310, a sliding ring 320, a movable ring 330, and a drive structure 340. The static ring 310 and the movable ring 330 are configured to be sleeved on the shaft 200 and are arranged in an axial direction. The static ring 310 and the shaft 200 can rotate relative to each other. To be specific, when the shaft 200 rotates, the static ring 310 remains stationary, and the movable ring 330 and the shaft 200 are fastened in a circumferential direction. In other words, rotation of the shaft 200 can drive the movable ring 330 to rotate synchronously. When the shaft 200 rotates, the movable ring 330 rotates with the shaft 200.

The static ring 310 includes a first end surface 311, and the sliding ring 320 includes a second end surface 321. The sliding ring 320 is disposed inside the static ring 310 or is sleeved outside the static ring 310 in a radial direction R of the static ring 310. The sliding ring 320 and the static ring 310 are fastened in a circumferential direction of the static ring 310 and can move relative to each other in an axial direction of the static ring 310. Hardnesses of the static ring 310 and the sliding ring 320 are different. A hardness of one of the static ring 310 and the sliding ring 320 is a first hardness, a hardness of the other of the static ring 310 and the sliding ring 320 is a second hardness, and the first hardness is less than the second hardness.

That the sliding ring 320 is sleeved outside the static ring 310 in the radial direction R of the static ring 310 means that the sliding ring 320 is sleeved on an outer circumferential side of the static ring 310. That the sliding ring 320 is disposed inside the static ring 310 in the radial direction R of the static ring 310 means that the static ring 310 is sleeved on an outer circumferential side of the sliding ring 320. The outer circumferential side of the static ring 310 is a side of an outer circumferential surface that is of the static ring 310 and that is away from the shaft 200. The outer circumferential side of the sliding ring 320 is a side of an outer circumferential surface that is of the sliding ring 320 and that is away from the shaft 200. In this implementation, the static ring 310 is sleeved on the outer circumferential side of the sliding ring 320. An axial direction of the static ring 310, the sliding ring 320, and the movable ring 330 is a first direction X (as shown in FIG. 3), an end surface that is of the static ring 310 and that is close to the movable ring 330 in the first direction X is a first end surface 311, and an end surface that is of the sliding ring 320 and that is close to the movable ring 330 in the first direction X is a second end surface 321. The sliding ring 320 and the static ring 310 are fastened in the circumferential direction and can move relative to each other in the axial direction. This indicates that the sliding ring 320 and the static ring 310 remain fastened and stationary relative to each other in the circumferential direction, but may slide relative to each other in the axial direction (the first direction X). In this implementation, the static ring 310 and the shaft 200 remain fastened in the axial direction, and the sliding ring 320 slides relative to the shaft 200 in the axial direction, so that the sliding ring 320 and the static ring 310 slide relative to each other in the axial direction.

The movable ring 330 is disposed at one end of both of the static ring 310 and the sliding ring 320 in the axial direction (the first direction X), and the movable ring 330 elastically presses against the first end surface 311 or the second end surface 321 in the axial direction. In this implementation, a hardness of the movable ring 330 is greater than or equal to the first hardness. In some implementations, the hardness of the movable ring 330 is less than the first hardness.

The elastically pressing against means that the movable ring 330 has an elastic force on the first end surface 311 or the second end surface 321, so that the movable ring 330 presses against the first end surface 311 or the second end surface 321. In an implementation, the mechanical sealing apparatus 300 further includes an elastic member 331. The elastic member 331 is sleeved on the shaft 200, and is located at one end that is of the movable ring 330 and that is away from the static ring 310. Through disposing of the elastic member 331, the movable ring 330 elastically presses against the first end surface 311 or the second end surface 321 in the axial direction. An elastic force of the elastic member 331 acts on the movable ring 330 in the first direction X, and the elastic member 331 enables the movable ring 330 to be closely attached to the first end surface 311 or the second end surface 321 to form a sealing surface. In this implementation, the elastic member 331 is a spring. In an implementation, the elastic member 331 is a dome or an elastic body.

Still refer to FIG. 3. In an implementation, the mechanical sealing apparatus 300 further includes a movable ring support 332. The movable ring support 332 is sleeved on the shaft 200. The elastic member 331, the movable ring support 332, and the movable ring 330 are disposed in the first direction X. The movable ring support 332 is fixedly connected to or presses against the movable ring 330, and the movable ring support 332 is fixedly connected to or presses against the elastic member 331, and the movable ring support 332 fits the elastic member 331, so that the movable ring 330 is more closely attached to the first end surface 311 or the second end surface 321. A specific shape of the movable ring support 332 may be set based on structures and sizes of the movable ring 330 and the elastic member 331. In some implementations, the elastic member 331 may be directly fixedly connected to or press against the movable ring 330. The pressing against means that two components are in contact with each other and the two components have an interaction force. For example, that the elastic member 331 presses against the movable ring 330 means that the elastic member 331 is in contact with the movable ring 330, the elastic member 331 has the elastic force on the movable ring 330, and the movable ring 330 has a reaction force on the elastic member 331.

The drive structure 340 is configured to drive the second end surface 321 to move toward the movable ring 330 in the axial direction (the first direction X) (as shown in FIG. 3), to form a sealing surface between the second end surface 321 and the movable ring 330 and form a gap between the first end surface 311 and the movable ring 330. When the drive structure 340 releases a driving force on the second end surface 321 toward the movable ring 330, the first end surface 311 and the movable ring 330 press against each other to form a sealing surface.

In this implementation, the movable ring 330, the static ring 310, and the sliding ring 320 are sleeved on the shaft 200 (as shown in FIG. 3), the movable ring 330 is located in the fluid cavity 100, the movable ring 330 is fastened to the shaft 200 and may rotate with the shaft 200, and the static ring 310 and the sliding ring 320 do not rotate with the shaft 200. When the shaft 200 rotates, the shaft 200 rotates to drive the movable ring 330 to rotate and the movable ring 330 rotates relative to the static ring 310 and the sliding ring 320.

Refer to FIG. 4. The drive structure 340 presses against or is fixedly connected to at least a part of the sliding ring 320, and the drive structure 340 drives the sliding ring 320 to move toward the movable ring 330, so that the sliding ring 320 presses against the movable ring 330. The static ring 310 is fastened in the first direction X, the drive structure 340 continues to drive the sliding ring 320 to move toward the movable ring 330, the sliding ring 320 pushes the movable ring 330 to move in a direction away from the static ring 310, the movable ring 330 and the static ring 310 are in an out-of-contact state, and there is a gap between the movable ring 330 and the static ring 310. In this case, the movable ring 330 rotates relative to the sliding ring 320 and only elastically presses against the second end surface 321. The second end surface 321 and the movable ring 330 form a sealing surface denoted as a second sealing surface 302. In this case, the mechanical sealing apparatus 300 implements sealing between an inside of the fluid cavity 100 and an outside of the fluid cavity 100 by using the second sealing surface 302.

Refer to FIG. 5. In this implementation, the drive structure 340 presses against the sliding ring 320. A manner in which the drive structure 340 releases the driving force on the sliding ring 320 toward the movable ring 330 includes moving the drive structure 340 in a direction away from the movable ring 330. When the drive structure 340 releases the driving force on the sliding ring 320 toward the movable ring 330, an elastic force of the elastic member 331 on the movable ring 330 pushes the sliding ring 320 to move in the direction away from the movable ring 330 until the movable ring 330 presses against the static ring 310 and the movable ring 330 cannot continue to move in the first direction X. The drive structure 340 continues to move in the direction away from the movable ring 330 until the movable ring 330 cannot be closely attached to the sliding ring 320 (as shown in FIG. 5). In this case, the movable ring 330 rotates relative to the static ring 310 and elastically presses against the first end surface 311, and the first end surface 311 of the static ring 310 and the movable ring 330 form a sealing surface denoted as a first sealing surface 301 (as shown in FIG. 5). In this implementation, when the drive structure 340 releases the driving force, and the movable ring 330 presses against the static ring 310, the drive structure 340 continues to move away from the movable ring 330 in the first direction X, so that a distance between an end surface that is of the drive structure 340 and that faces the sliding ring 320 and an end surface that is of the movable ring 330 and that faces the sliding ring 320 is greater than a length of the sliding ring 320 in the first direction X, and the sliding ring 320 may be located at any position between the drive structure 340 and the sliding ring 320. In this case, even if the second end surface 321 of the sliding ring 320 is in contact with the movable ring 330, because no additional acting force is on the sliding ring 320 toward the movable ring 330, the second end surface 321 cannot be closely attached to the movable ring 330 to form an effective sealing surface. In this case, the mechanical sealing apparatus 300 implements sealing between the inside of the fluid cavity 100 and the outside of the fluid cavity 100 by using the first sealing surface 301.

In an implementation, the drive structure 340 is fixedly connected to the sliding ring 320 (as shown in FIG. 6). When the drive structure 340 releases the driving force on the sliding ring 320 toward the movable ring 330, the drive structure 340 moves away from the movable ring 330 in the first direction X, and the drive structure 340 drives the sliding ring 320 to move in the direction away from the movable ring 330, so that a gap is formed between the movable ring 330 and the second end surface 321.

Hardnesses of the static ring 310, the sliding ring 320, and the movable ring 330 are different, and this affects an application scenario of the mechanical sealing apparatus 300. The hardnesses of the static ring 310 and the sliding ring 320 are different, and the first sealing surface 301 formed by the movable ring 330 and the static ring 310 and the second sealing surface 302 formed by the movable ring 330 and the sliding ring 320 can be applicable to different scenarios.

The fluid may be liquid, a serous fluid that can flow, or a molten substance, and the liquid includes water, an organic solvent, a mixed organic solvent, or the like. When the fluid F is liquid, mechanical sealing effect can be achieved by forming the sealing surface between the movable ring 330 and the static ring 310 or the sliding ring 320.

When a solid particle is mixed in the fluid F, a larger hardness of a material of the sealing surface indicates that the sealing surface is less likely to be worn by the solid particle. If one that is of the static ring 310 and the sliding ring 320 and that has a smaller hardness is used with the movable ring 330, the hard solid particle is likely to damage the one that is of the static ring 310 and the sliding ring 320 and that has the smaller hardness, resulting in reduced sealing performance and even a loss of sealing effect. In this case, one that is of the static ring 310 and the sliding ring 320 and that has a larger hardness should be used with the movable ring 330. In this implementation, the hardness of the movable ring 330 is greater than or equal to the first hardness, and both the hardness of the one that is of the static ring 310 and the sliding ring 320 and that has the larger hardness and the hardness of the movable ring 330 are large. When the hard solid particle enters the sealing surface, the sealing surface is not damaged, and a service life of the sealing surface is prolonged. In an implementation, when the hardness of the movable ring 330 is less than the first hardness, the one that is of the static ring 310 and the sliding ring 320 and that has the larger hardness is used with the movable ring 330. Compared with that the one that is of the static ring 310 and the sliding ring 320 and that has the smaller hardness is used with the movable ring 330, the sealing surface is less damaged, and the service life of the sealing surface can be prolonged.

When there is gas in the fluid F, a larger hardness of a material of the sealing surface indicates that greater heat is generated during rotating sealing. If one that is of the static ring 310 and the sliding ring 320 and that has a larger hardness is used with the movable ring 330, in this implementation, the hardness of the movable ring 330 is greater than or equal to the first hardness, friction between the movable ring 330 and the one that is of the static ring 310 and the sliding ring 320 and that has the larger hardness generates a large amount of heat that is unlikely to dissipate, and this causes the mechanical sealing apparatus 300 to be likely to burn out. In this case, one that is of the static ring 310 and the sliding ring 320 and that has a smaller hardness is used with the movable ring 330, so that friction to the sealing surface generates less heat, a risk of burning-out of the sealing surface is reduced, and the service life of the mechanical sealing apparatus 300 is prolonged. In an implementation, when the hardness of the movable ring 330 is less than the first hardness, the one that is of the static ring 310 and the sliding ring 320 and that has the smaller hardness is used with the movable ring 330. Compared with that the one that is of the static ring 310 and the sliding ring 320 and that has the larger hardness is used with the movable ring 330, the friction to the sealing surface generates less heat, and the service life of the sealing surface is prolonged.

In an implementation, the mechanical sealing apparatus 300 only uses the sealing surface formed by the static ring 310 and the movable ring 330 to achieve sealing effect, and the sealing surface formed by the static ring 310 and the movable ring 330 cannot adapt to a plurality of fluid states. When a property of the fluid F in the fluid cavity 100 changes, and the hardness of the static ring 310 or the movable ring 330 does not change, the mechanical sealing apparatus 300 is likely to be damaged. If the static ring 310 or the movable ring 330 is replaced to adapt to an environment of the fluid F, the mechanical sealing apparatus 300 needs to be disassembled and assembled again. This causes inconvenience in use or cannot be implemented at all.

In this application, through disposing of the sliding ring 320 (as shown in FIG. 3 to FIG. 6), the second sealing surface 302 and the first sealing surface 301 may be separately formed between the movable ring 330 and both of the sliding ring 320 and the static ring 310. The first sealing surface 301 and the second sealing surface 302 are applicable to different fluid F environments, so that the mechanical sealing apparatus 300 can adapt to the different fluid F environments, a use range of the mechanical sealing apparatus 300 is expanded, sealing effect of the mechanical sealing apparatus 300 is improved, and a function and safety performance of the fluid mechanical device 10 are improved.

In a possible implementation, the hardness of the static ring 310 is the first hardness, and the hardness of the sliding ring 320 is the second hardness. In other words, the hardness of the static ring 310 is less than the hardness of the sliding ring 320, and the hardness of the movable ring 330 is greater than the hardness of the static ring 310. In an implementation, the hardness of the movable ring 330 is further greater than the hardness of the sliding ring 320. In an implementation, the hardness of the movable ring 330 may be less than the hardness of the sliding ring 320 and greater than the hardness of the static ring 310. In an implementation, the hardness of the movable ring 330 may be less than the hardness of the sliding ring 320 and less than the hardness of the static ring 310.

In an implementation, a material of the static ring 310 is graphite, a material of the sliding ring 320 is silicon carbide, and a hardness of graphite is less than a hardness of silicon carbide.

In an implementation, materials of the sliding ring 320, the static ring 310, and the movable ring 330 are selected from phenolic plastic, nylon, polytetrafluoroethylene, graphite impregnated with resin, rubber, ceramic, surfacing cemented carbide, a tungsten carbide alloy, tin bronze, steel-bonded cemented carbide, stainless steel, graphite, and silicon carbide, the hardness of the static ring 310 is less than the hardnesses of the sliding ring 320 and the movable ring 330, and hardness differences among the sliding ring 320, the static ring 310, and the movable ring 330 may be adjusted based on the fluid in the fluid cavity 100 or an actual requirement. For example, in an implementation, the second hardness and the first hardness are on a Mohs hardness scale, and a level of the second hardness is at least one level higher than a level of the first hardness. In an implementation, the second hardness and the first hardness are on a Mohs hardness scale, and a level of the second hardness is two levels higher than a level of the first hardness. In an implementation, the second hardness and the first hardness are on a Rockwell Hardness A scale (HRA). The second hardness is 80 HRA to 90 HRA, and the first hardness is 55 HRA to 70 HRA. In an implementation, the second hardness and the first hardness are on a Rockwell Hardness A scale (HRA). A value of the second hardness is at least 10 HRA greater than a value of the first hardness. In an implementation, the second hardness and the first hardness are on a Rockwell Hardness A scale (HRA). A value of the second hardness is 20 HRA greater than a value of the first hardness.

When the fluid F is liquid, the fluid status includes a first state, a second state, and a third state. The first state is that gas content in the fluid is greater than or equal to a first preset value, and solid content in the fluid is less than a second preset value. The second state is that the solid content in the fluid is greater than or equal to the second preset value, and the gas content in the fluid is less than the first preset value. The third state is that the gas content in the fluid is less than the first preset value, and the solid content in the fluid is less than the second preset value. The first preset value and the second preset value may be set based on hardnesses or sizes of the sliding ring 320, the static ring 310, and the movable ring 330, or may be set based on an actual requirement.

In this implementation, the hardness of the sliding ring 320 is greater than the hardness of the static ring 310, and the hardness of the movable ring 330 is greater than the hardness of the static ring 310. In this implementation, an example in which the fluid mechanical device 10 is a pump 11 is used to describe an operating process of the mechanical sealing apparatus 300 in the pump 11. When the mechanical sealing apparatus 300 is used in the pump 11 (as shown in FIG. 7), the fluid F in the fluid cavity 100 is water, and the impeller 110 rotates to drive the water to enter and leave the fluid cavity 100. The fluid cavity 100 includes an inlet 102 and an outlet 103, the water enters the fluid cavity 100 from the inlet 102 in the first direction X, and is transmitted from the outlet 103 in a second direction Y to the outside of the fluid cavity 100, and the second direction Y is perpendicular to the first direction X. The static ring 310 is sleeved on the outer circumferential side of the sliding ring 320 (as shown in FIG. 3), and the static ring 310 is fixedly connected to an inner surface of the housing 101.

When the pump 11 operates, the water entering the fluid cavity 100 includes the first state, the second state, and the third state described above. When the fluid status is the second state, that is, many solid particles are mixed in the water, the drive structure 340 drives the sliding ring 320 to move toward the movable ring 330, so that the sliding ring 320 is closely attached to the movable ring 330 to form the second sealing surface 302 (as shown in FIG. 4), and the gap is formed between the movable ring 330 and the first end surface 311 of the static ring 310. The second sealing surface 302 formed by the movable ring 330 and the second end surface 321 seals the fluid cavity 100. Because the hardness of the sliding ring 320 is greater than the hardness of the static ring 310, and a hardness of a material of the second sealing surface 302 is large, the mechanical sealing apparatus 300 is unlikely to be worn by a solid, and the service life of the mechanical sealing apparatus 300 can be prolonged.

When the fluid status is the first state, that is, there is a large quantity of gas in the water, the drive structure 340 releases the driving force on the sliding ring 320 toward the movable ring 330 (as shown in FIG. 5). Under the action of the elastic member 331, the movable ring 330 presses against the static ring 310 in the first direction and is closely attached to the static ring 310 to form the first sealing surface 301. No additional driving force is on the sliding ring 320 toward the movable ring 330 to closely attach the second end surface 321 to the movable ring 330. In this case, the second end surface 321 is in contact with the movable ring 330 to form the gap. In the mechanical sealing apparatus 300, the first sealing surface 301 formed by the movable ring 330 and the first end surface 311 plays a sealing role. Because the hardness of the static ring 310 is less than the hardness of the sliding ring 320, the mechanical sealing apparatus 300 is unlikely to generate a large amount of heat and burn out, and the service life of the mechanical sealing apparatus 300 is increased.

When the fluid status is the third state, that is, there are few bubbles or solid particles in the water, or there is no bubble or solid particle, the first sealing surface 301 formed by the movable ring 330 and the static ring 310 or the second sealing surface 302 formed by the movable ring 330 and the sliding ring 320 can achieve the mechanical sealing effect.

That is, in this embodiment, through disposing of the sliding ring 320, the pump 11 enables the mechanical sealing apparatus 300 to form different sealing surfaces to adapt to different water states and to prevent the water from leaking to the outside of the fluid cavity 100 through the junction between the shaft 200 and the housing 101. This can avoid reducing operating efficiency of the pump 11, prevent the water from leaking to the motor 210 and causing damage and corrosion to the motor 210. In addition, the service life of the mechanical sealing apparatus 300 can be prolonged, and sealing reliability of the pump 11 can be ensured.

It should be noted that the pump 11 in FIG. 7 is merely an example for description, and does not constitute a limitation on composition of the pump 11. In this application, the pump 11 may alternatively be another structure.

In a possible implementation, the hardness of the static ring 310 is the second hardness, and the hardness of the sliding ring 320 is the first hardness, that is, the hardness of the static ring 310 is greater than the hardness of the sliding ring 320. In an implementation, the hardness of the movable ring 330 is greater than the hardness of the sliding ring 320. In an implementation, the hardness of the movable ring 330 is further greater than the hardness of the static ring 310. In an implementation, the hardness of the movable ring 330 may be less than the hardness of the static ring 310 and greater than the hardness of the sliding ring 320.

In an implementation, a material of the sliding ring 320 is graphite, a material of the static ring 310 is silicon carbide, and a hardness of graphite is less than a hardness of silicon carbide. In an implementation, materials of the sliding ring 320, the static ring 310, and the movable ring 330 are selected from phenolic plastic, nylon, polytetrafluoroethylene, graphite impregnated with resin, rubber, ceramic, surfacing cemented carbide, a tungsten carbide alloy, tin bronze, steel-bonded cemented carbide, stainless steel, graphite, and silicon carbide, the hardness of the sliding ring 320 is less than the hardnesses of the static ring 310 and the movable ring 330, and hardness differences among the sliding ring 320, the static ring 310, and the movable ring 330 may be adjusted based on an actual requirement.

In this implementation, the hardness of the static ring 310 is greater than the hardness of the sliding ring 320, and the hardness of the movable ring 330 is greater than the hardness of the static ring 310. When the fluid F is in the third state, the sealing surface formed by the movable ring 330 and the static ring 310 or the sliding ring 320 can achieve the mechanical sealing effect. When the fluid F is in the first state, that is, there are many bubbles in the fluid F, the drive structure 340 drives the sliding ring 320 with a small hardness to move toward the movable ring 330, so that the sliding ring 320 is closely attached to the movable ring 330 to form the second sealing surface 302 (as shown in FIG. 4), and the gap is formed between the movable ring 330 and the first end surface 311. The second sealing surface 302 formed by the movable ring 330 and the second end surface 321 seals the fluid cavity 100. Because the hardness of the sliding ring 320 is less than the hardness of the static ring 310, the mechanical sealing apparatus 300 is unlikely to generate a large amount of heat and burn out, and the service life of the mechanical sealing apparatus 300 is prolonged. When the fluid F is in the second state, that is, there are many solid particles in the fluid F, the drive structure 340 moves in the first direction X, and the drive structure 340 releases the driving force on the sliding ring 320 toward the movable ring 330. Under the action of the elastic member 331, the movable ring 330 presses against the static ring 310 in the first direction and is closely attached to the static ring 310 to form the first sealing surface 301, and no additional driving force is on the sliding ring 320 toward the movable ring 330 to closely attach the second end surface 321 to the movable ring 330. In this case, the second end surface 321 and the movable ring 330 are in contact or form the gap. In the mechanical sealing apparatus 300, the first sealing surface 301 formed by the movable ring 330 and the first end surface 311 plays the sealing role. Because the hardness of the static ring 310 is greater than the hardness of the sliding ring 320, and the hardness of the material of the second sealing surface 302 is large, the mechanical sealing apparatus 300 is unlikely to be worn by the solid, and the service life of the mechanical sealing apparatus 300 can be prolonged.

In an implementation, the mechanical sealing apparatus 300 includes a plurality of sliding rings 320 that have different hardnesses. The drive structure 340 may separately drive the sliding rings 320 to move toward the movable ring 330, so that each sliding ring 320 can be closely attached to the movable ring 330 to form the sealing surface. In an implementation, the drive structure 340 simultaneously drives at least two of the sliding rings 320 to move toward the movable ring 330, so that the at least two of the sliding rings 320 are simultaneously closely attached to the movable ring 330 to form the sealing surfaces. The plurality of sliding rings 320 may be disposed to further expand an application scenario and a use range of the mechanical sealing apparatus 300.

Still refer to FIG. 3. In a possible implementation, the drive structure 340 presses against or is fixedly connected to one end that is of the sliding ring 320 and that is away from the movable ring 330. When the drive structure 340 presses against the sliding ring 320, the sliding ring 320 moves in the direction away from the movable ring 330, and this is implemented in a manner that the movable ring 330 is driven to move by the elastic force of the elastic member 331 on the movable ring 330, and then the movable ring 330 drives the sliding ring 320. When the drive structure 340 is fixedly connected to the sliding ring 320, the drive structure 340 can directly drive the sliding ring 320 to move in the direction away from the movable ring 330 in the first direction X, so that the sliding ring 320 can move in the first direction X without relying on an action of the elastic member 331. In addition, the drive structure 340 may drive the sliding ring 320 to move away from the movable ring 330, so that the gap is formed between the second end surface 321 and the movable ring 330, and the mechanical sealing apparatus 300 can respond to an environment change faster, and better adapt to an environment change of the fluid F.

Still refer to FIG. 3. In a possible implementation, the static ring 310 is sleeved on the outer circumferential side of the sliding ring 320. The sliding ring 320 needs to move away from or close to the movable ring 330 in the first direction X, and the sliding ring 320 is located inside the static ring 310. A size of the sliding ring 320 may be set to be small, so that a friction force between the sliding ring 320 and the static ring 310 or the shaft 200 is small, and the drive structure 340 may easily push the sliding ring 320 to slide in the first direction X.

In a possible implementation, when the drive structure 340 releases the driving force on the second end surface 321 toward the movable ring 330, the first end surface 311 is aligned with the second end surface 321 (as shown in FIG. 3). If the first end surface 311 is not aligned with the second end surface 321, a process design is complex, and when the drive structure 340 drives the second end surface 321 to move, the second end surface 321 needs to move for an additional distance to press against the movable ring 330, or when the elastic member 331 enables the movable ring 330 to press against the first end surface 311, the movable ring 330 needs to move for an additional distance. This increases a loss of the mechanical sealing apparatus 300. However, the first end surface 311 is aligned with the second end surface 321. This design can reduce process processing difficulty, increase operating efficiency of the mechanical sealing apparatus 300, and reduce an operating loss. In addition, an end surface that is of the movable ring 330 and that is close to the static ring 310 and the sliding ring 320 is a flat surface, so that attaching precision between the movable ring 330 and the first end surface 311 or the second end surface 321 is high.

Still refer to FIG. 3. In a possible implementation, the static ring 310 is sleeved on the outer circumferential side of the sliding ring 320, the mechanical sealing apparatus 300 further includes a static ring support 312, and the static ring support 312 is configured to fasten the static ring 310 to an outer circumferential surface of the static ring 310. The static ring 310 is fixedly connected to the static ring support 312, to prevent the static ring 310 from getting loose in an operation process of the fluid mechanical device 10 and to avoid reducing sealing effect between the static ring 310 and the movable ring 330.

In a possible implementation, the static ring support 312 includes a circumferential surface support part 3121 and an end surface support part 3122 (as shown in FIG. 3) that are connected to each other, the end surface support part 3122 is located at one end of the circumferential surface support part 3121, the circumferential surface support part 3121 is configured to fasten the static ring 310 to the outer circumferential side of the static ring 310, the end surface support part 3122 covers an end surface that is of the static ring 310 and that is away from the movable ring 330, and exposes at least a part of an end surface that is of the sliding ring 320 and that is away from the movable ring 330, and the drive structure 340 is located on an inner circumferential side of the end surface support part 3122, and presses against or is fixedly connected to the end surface that is of the sliding ring 320 and that is away from the movable ring 330, to drive the sliding ring 320 to move toward the movable ring 330 in the axial direction.

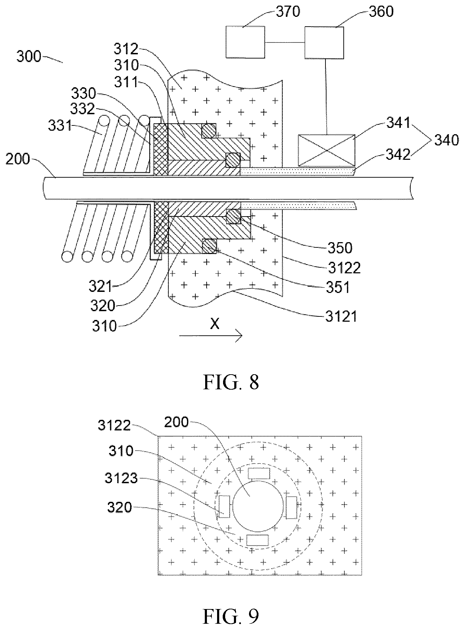

In this implementation, the entire end surface that is of the sliding ring 320 and that is away from the movable ring 330 is not covered by the end surface support part 3122, and the drive structure 340 presses against or is fixedly connected to the end surface that is of the sliding ring 320 and that is away from the movable ring 330. In an implementation, a part of the end surface that is of the sliding ring 320 and that is away from the movable ring 330 is covered by the end surface support part 3122, and a part of the end surface that is of the sliding ring 320 and that is away from the movable ring 330 is exposed. A structure of the drive structure 340 presses against or is fixedly connected to the exposed part of the end surface of the sliding ring 320 (as shown in FIG. 8).

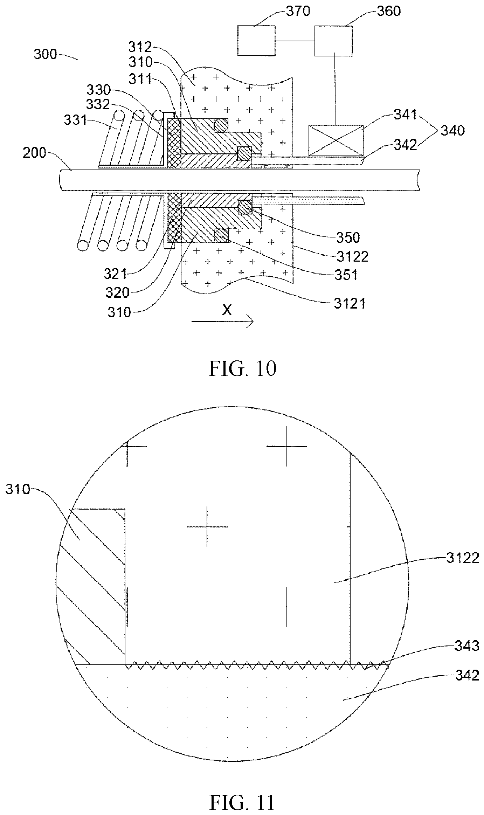

In an implementation, the end surface support part 3122 is provided with a through hole 3123 that penetrates the end surface support part 3122 (as shown in FIG. 9 and FIG. 10), and exposes at least a part of the end surface that is of the sliding ring 320 and that is away from the movable ring 330, and the drive structure 340 passes through the through hole 3123, and presses against or is fixedly connected to the end surface that is of the sliding ring 320 and that is away from the movable ring 330. In this implementation, the outer circumferential side of the static ring 310 and the end surface that is of the static ring 310 and that is away from the movable ring 330 are both covered by the static ring support 312, so that the static ring 310 is fastened in both the radial direction R and the axial direction. This improves stability of the static ring 310. The part of the end surface that is of the sliding ring 320 and that is away from the movable ring 330 is covered by the end surface support part 3122, and a gap is formed between the part of the end surface that is of the sliding ring 320 and that is away from the movable ring 330 and the end surface support part 3122, so that the sliding ring 320 is limited between the movable ring 330 and the end surface support part 3122, to avoid that the sliding ring 320 is detached from the mechanical sealing apparatus 300 in the first direction X and thus reduces the sealing effect of the mechanical sealing apparatus 300 and causes the mechanical sealing apparatus 300 not to be applicable to a plurality of scenarios. In an implementation, a plurality of through holes 3123 may be disposed, so that the drive structure 340 has a sufficient driving force to drive the sliding ring 320 to move.

Refer to FIG. 11. In a possible implementation, an inner surface of the end surface support part 3122 is in a threaded connection to an outer surface of the drive structure 340. A thread 343 is disposed on a surface that is of the end surface support part 3122 and that is in contact with the drive structure 340, and a matching thread 343 is also disposed on a surface that is of the drive structure 340 and that is in contact with the end surface support part 3122. The thread of the end surface support part 3122 fits the thread of the drive structure 340, so that the drive structure 340 implements movement in the first direction X through rotation. The end surface support part 3122 is in the threaded connection to the drive structure 340, so that movement of the drive structure 340 can be controlled with higher precision. This improves the sealing effect of the mechanical sealing apparatus 300.

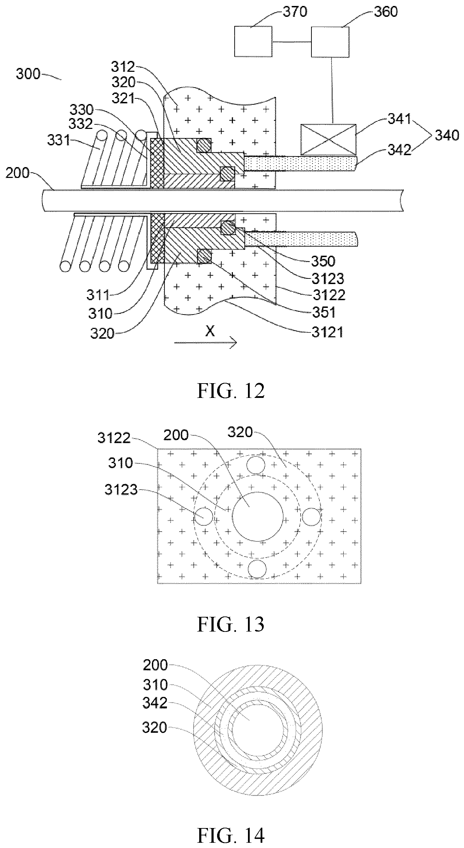

Refer to FIG. 12. In a possible implementation, the sliding ring 320 is sleeved on the outer circumferential side of the static ring 310. The static ring 310 is located between the sliding ring 320 and the shaft 200.

In a possible implementation, the mechanical sealing apparatus 300 further includes a static ring support 312, the sliding ring 320 is located between the static ring support 312 and the static ring 310, the static ring support 312 includes a circumferential surface support part 3121 and an end surface support part 3122 (as shown in FIG. 12) that are connected to each other, the end surface support part 3122 is located at one end of the circumferential surface support part 3121, the circumferential surface support part 3121 is located on the outer circumferential side of the sliding ring 320, the end surface support part 3122 is configured to fasten the static ring 310 to an end surface that is of the static ring 310 and that is away from the movable ring 330, the end surface support part 3122 is provided with a through hole 3123 that penetrates the end surface support part 3122, and exposes at least a part of an end surface that is of the sliding ring 320 and that is away from the movable ring 330, and the drive structure 340 passes through the through hole 3123, and presses against or is fixedly connected to the end surface that is of the sliding ring 320 and that is away from the movable ring 330, to drive the sliding ring 320 to move toward the movable ring 330 in the axial direction. In an implementation, the static ring 310 is fixedly connected to the end surface support part 3122, and the sliding ring 320 and the circumferential surface support part 3121 may slide relative to each other.

In an implementation, the end surface support part 3122 is provided with a plurality of through holes 3123 (as shown in FIG. 13), and the drive structure 340 passes through the plurality of through holes 3123 and presses against or is fixedly connected to the sliding ring 320, so that the drive structure 340 has a sufficient driving force to drive the sliding ring 320 to move. In an implementation, a thread is disposed on an outer surface that is of the drive structure 340 and that is in contact with the through hole 3123, a thread is disposed on an inner surface that is of the through hole 3123 and that is in contact with the drive structure 340, and the drive structure 340 is in a threaded connection to the through hole 3123, so that movement of the drive structure 340 can be controlled with higher precision. The sliding ring 320 is limited between the circumferential surface support part 3121 and the static ring 310, and the sliding ring 320 is limited between the end surface support part 3122 and the movable ring 330, so that overall stability of the mechanical sealing apparatus 300 is improved, and sealing effect can be better achieved.

In a possible implementation, a first sealing ring 350 is disposed between the static ring 310 and the sliding ring 320 (as shown in FIG. 3 and FIG. 12). The first sealing ring 350 seals a gap between the static ring 310 and the sliding ring 320, to prevent the fluid F from leaking to the outside of the fluid cavity 100 from the gap between the static ring 310 and the sliding ring 320, and the first sealing ring 350 can improve sealing performance of the mechanical sealing apparatus 300. The first sealing ring 350 is an elastic sealing ring, and may be a rubber ring.

In an implementation, the sliding ring 320 is sleeved on the outer circumferential side of the static ring 310, a second sealing ring 351 is disposed between the sliding ring 320 and the static ring support 312 (as shown in FIG. 12), the second sealing ring 351 seals a gap between the sliding ring 320 and the static ring support 312, to prevent the fluid F from leaking to the outside of the fluid cavity 100 from the gap between the sliding ring 320 and the static ring support 312, and the second sealing ring 351 can improve the sealing performance of the mechanical sealing apparatus 300.

In an implementation, the static ring 310 is sleeved on the outer circumferential side of the sliding ring 320, a second sealing ring 351 is disposed between the static ring 310 and the static ring support 312 (as shown in FIG. 3), the second sealing ring 351 seals a gap between the static ring 310 and the static ring support 312, to prevent the fluid F from leaking to the outside of the fluid cavity 100 from the gap between the static ring 310 and the static ring support 312, and the second sealing ring 351 can improve the sealing performance of the mechanical sealing apparatus 300.

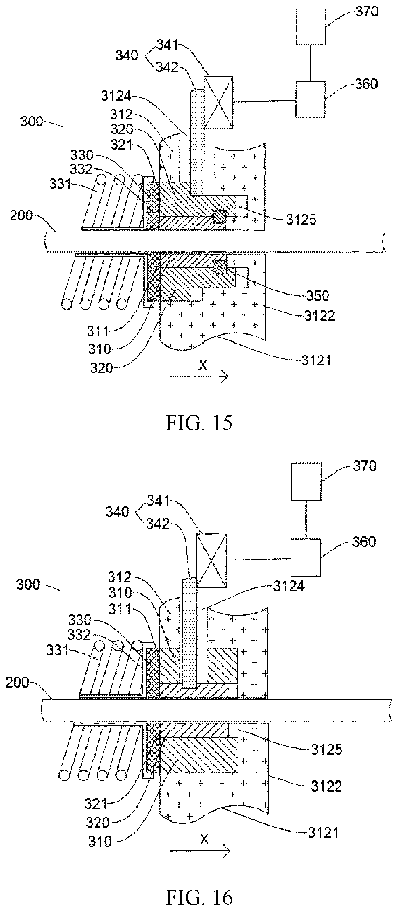

Refer to FIG. 3 again. In a possible implementation, the drive structure 340 includes a drive motor 341 and a sliding ring adjustment rod 342, the sliding ring adjustment rod 342 is located at one end that is of the sliding ring 320 and that is away from the movable ring 330, and the drive motor 341 is configured to drive the sliding ring adjustment rod 342 to move in the axial direction, to drive the sliding ring 320 to move toward the movable ring 330 in the axial direction. In an implementation, an extension direction of the sliding ring adjustment rod 342 is the first direction X, the extension direction of the sliding ring adjustment rod 342 is consistent with an axial direction of the sliding ring 320, and a driving force of the sliding ring adjustment rod 342 directly acts on the sliding ring 320, so that the sliding ring 320 may be better driven to move. In an implementation, the extension direction of the sliding ring adjustment rod 342 and the axial direction of the sliding ring 320 are disposed in an included angle (as shown in FIG. 15 and FIG. 16), so that a size of the mechanical sealing apparatus 300 in the first direction X can be reduced, and the mechanical sealing apparatus 300 adapts to different internal space environments of the fluid mechanical device 10.

Still refer to FIG. 15. In an implementation, the extension direction of the sliding ring adjustment rod 342 and the axial direction of the sliding ring 320 are disposed in an included angle, where a value of the included angle is greater than 0 degrees and is less than or equal to 90 degrees. The sliding ring 320 is sleeved on the outer circumferential side of the static ring 310. The circumferential surface support part 3121 is provided with a groove 3124. The sliding ring adjustment rod 342 presses against or is fixedly connected to the sliding ring 320 through the groove 3124. The sliding ring 320 is limited between the end surface support part 3122 and the movable ring 330. In addition, a clearance 3125 is reserved between the end surface support part 3122 and the movable ring 330, so that the sliding ring 320 may move between the end surface support part 3122 and the movable ring 330, and the sliding ring adjustment rod 342 may drive the sliding ring 320 to move in the groove 3124 in the first direction X or away from the first direction X.

Still refer to FIG. 16. In an implementation, the extension direction of the sliding ring adjustment rod 342 and the axial direction of the sliding ring 320 are disposed in an included angle, where a value of the included angle is greater than 0 degrees and is less than or equal to 90 degrees. The static ring 310 is sleeved on the outer circumferential side of the sliding ring 320. The circumferential surface support part 3121 and the static ring 310 are provided with a groove 3124. The sliding ring adjustment rod 342 presses against, is clamped to, or is fixedly connected to a circumferential side of the sliding ring 320 through the groove 3124. The end surface support part 3122 and the movable ring 330 limit the sliding ring 320 between the end surface support part 3122 and the movable ring 330, and reserve a clearance 3125 for the sliding ring 320 to move between the end surface support part 3122 and the movable ring 330. The sliding ring adjustment rod 342 may drive the sliding ring 320 to move in the groove 3124 in the first direction X or away from the first direction X, and a size of the groove 3124 in the first direction X is greater than a size of the sliding ring adjustment rod 342 in the first direction X, so that the sliding ring adjustment rod 342 may move in the groove 3124 in the first direction X.

Still refer to FIG. 10 and FIG. 14. In a possible implementation, the sliding ring adjustment rod 342 is of a hollow structure and is disposed coaxial with the sliding ring 320, an inner diameter of the sliding ring adjustment rod 342 is greater than or equal to an inner diameter of the sliding ring 320, and an outer diameter of the sliding ring adjustment rod 342 is less than or equal to an outer diameter of the sliding ring 320. In this implementation, the static ring 310 is sleeved on the outer circumferential side of the sliding ring 320, the sliding ring adjustment rod 342 presses against or is fixedly connected to an end surface that is of the sliding ring 320 and that is away from the movable ring 330, and the inner diameter of the sliding ring adjustment rod 342 is greater than or equal to the inner diameter of the sliding ring 320. In this case, when the sliding ring adjustment rod 342 is sleeved on the shaft 200 and slides relative to the shaft, friction between the sliding ring adjustment rod 342 and the shaft 200 can be reduced, efficiency of the drive motor 341 can be improved, and an energy loss can be reduced. The outer diameter of the sliding ring adjustment rod 342 is less than or equal to the outer diameter of the sliding ring 320, so that in a process in which the sliding ring adjustment rod 342 drives the sliding ring 320 to move, friction between the sliding ring adjustment rod 342 and the static ring 310 is reduced, efficiency of the drive motor 341 is improved, and an energy loss is reduced.

In an implementation, the outer diameter of the sliding ring adjustment rod 342 is equal to the outer diameter of the sliding ring 320 (as shown in FIG. 3), the inner diameter of the sliding ring adjustment rod 342 is equal to the inner diameter of the sliding ring 320, the end surface that is of the sliding ring 320 and that is away from the movable ring 330 is covered by the sliding ring adjustment rod 342, two ends of the sliding ring 320 in the first direction X are limited between the movable ring 330 and the sliding ring adjustment rod 342, and a contact area between the sliding ring adjustment rod 342 and the sliding ring 320 is large, in other words, an action force area between the sliding ring adjustment rod 342 and the sliding ring 320 is large. This is more conducive to driving movement of the sliding ring 320.

In an implementation, the sliding ring adjustment rod 342 is of a cylindrical structure (as shown in FIG. 12 and FIG. 13), the sliding ring adjustment rod 342 presses against or is fixedly connected to a part of the end surface that is of the sliding ring 320 and that is away from the movable ring 330, the sliding ring adjustment rod 342 is disposed on an outer circumferential side of the shaft 200 and is parallel to the shaft 200, and a diameter of the sliding ring adjustment rod 342 is less than or equal to a difference between the outer diameter and the inner diameter of the sliding ring 320, so that the sliding ring adjustment rod 342 is unlikely to be blocked by the static ring 310 or the shaft 200 and have difficulty in continuing moving in a process of driving the sliding ring 320. In order that the sliding ring adjustment rod 342 can more effectively drive the sliding ring 320 to move, a plurality of sliding ring adjustment rods 342 may be disposed. In an implementation, the sliding ring adjustment rod 342 may alternatively be in a flat shape, an arc-shaped fine cuboid shape, or the like, and may be set based on an actual requirement.

In an implementation, the sliding ring adjustment rod 342 presses against, is clamped to, or is fixedly connected to the circumferential side of the sliding ring 320 (as shown in FIG. 16), and the diameter of the sliding ring adjustment rod 342 may be set based on an actual requirement, to provide a more effective driving force.

Still refer to FIG. 3. In a possible implementation, the mechanical sealing apparatus 300 further includes a detection apparatus 360 and a controller 370 (as shown in FIG. 3), the detection apparatus 360 is configured to detect a fluid status, and the controller 370 controls, based on the fluid status, the drive structure 340 to drive the second end surface 321 of the sliding ring 320 to move toward the movable ring 330 in the axial direction or to release the driving force on the second end surface 321 toward the movable ring 330.

In an implementation, the detection apparatus 360 is a refractometer, and a refractive index of the fluid F is detected to distinguish whether a status of the fluid F is the first state, the second state, or the third state. Detected status information of the fluid F is fed back to the controller 370, and the controller 370 controls movement of the drive structure 340 after identifying the information. In an implementation, the detection apparatus 360 is a density analyzer, and a density of the fluid F is detected to distinguish whether a status of the fluid F is the first state, the second state, or the third state. In an implementation, the fluid mechanical device 10 is the pump 11, and the detection apparatus 360 is located on a side of the inlet 102 of the pump 11, and is configured to detect a status of a fluid entering the fluid cavity 100 from the inlet 102. In an implementation, the detection apparatus 360 is located on a side of the outlet 103 of the pump 11, and is configured to detect a status of a fluid flowing out of the fluid cavity 100 from the outlet 103. In another implementation, the detection apparatus 360 may alternatively be an infrared detection apparatus, a sensor, or the like, provided that the first state, the second state, or the third state of the liquid can be detected.

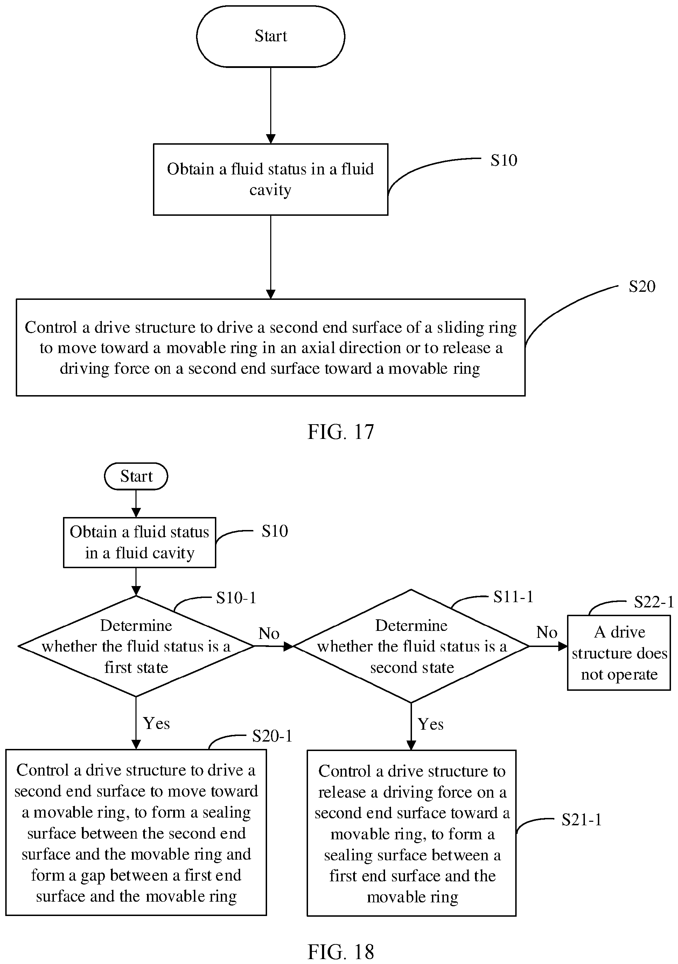

Refer to FIG. 17, FIG. 1, and FIG. 3. An embodiment of this application provides a mechanical sealing method, applied to the foregoing fluid mechanical device 10. The mechanical sealing method includes step S10 and step S20.

Step S10: Obtain a fluid status in the fluid cavity 100.

Step S20: Control, based on the fluid status, the drive structure 340 to drive the second end surface 321 of the sliding ring 320 to move toward the movable ring 330 in the axial direction or to release the driving force on the second end surface 321 toward the movable ring 330.

In an implementation, the fluid status includes a first state, a second state, and a third state. The first state is that gas content in the fluid is greater than or equal to a first preset value, and solid content in the fluid is less than a second preset value. The second state is that the solid content in the fluid is greater than or equal to the second preset value, and the gas content in the fluid is less than the first preset value. The third state is that the gas content in the fluid is less than the first preset value, and the solid content in the fluid is less than the second preset value.

In a possible implementation, when the hardness of the sliding ring 320 is the first hardness, and the hardness of the static ring 310 is the second hardness, the first hardness is less than the second hardness, that is, the hardness of the sliding ring 320 is less than the hardness of the static ring 310. Step S20 includes step S10-1 and step S20-1 (as shown in FIG. 18).

Step S10-1: Determine whether the fluid status is the first state.

Step S20-1: When the fluid status is the first state, control the drive structure 340 to drive the second end surface 321 of the sliding ring 320 to move toward the movable ring 330 in the axial direction, to form the sealing surface between the second end surface 321 and the movable ring 330 and form the gap between the first end surface 311 and the movable ring 330. Mechanical sealing is implemented by using the sealing surface formed by the second end surface 321 and the movable ring 330.

In an implementation, step S20 further includes step S11-1, step S21-1, and step S22-1 (as shown in FIG. 18).

Step S11-1: When the fluid status is not the first state, determine whether the fluid status is the second state.

Step S21-1: When the fluid status is the second state, control the drive structure 340 to release the driving force on the second end surface 321 toward the movable ring 330, to form the sealing surface between the first end surface 311 and the movable ring 330. Mechanical sealing is implemented by using the sealing surface formed by the first end surface 311 and the movable ring 330.

Step S22-1: When the fluid status is neither the first state nor the second state, the drive structure 340 does not operate. The fluid status is neither the first state nor the second state, that is, the fluid status is the third state. When the fluid is water, it may be understood that the water in the third state includes only a few bubbles or a few solid particles, or the water in the third state does not include bubble or fixed particle. That the drive structure 340 does not operate means that the drive structure 340 maintains an original state and does not further operate. That is, when the mechanical sealing is currently performed by the sealing surface formed by the first end surface 311 and the movable ring 330, the drive structure 340 does not operate, in other words, the sealing surface formed by the first end surface 311 and the movable ring 330 is currently maintained for the mechanical sealing. Currently, if the mechanical sealing is performed by the sealing surface formed by the second end surface 321 and the movable ring 330, the drive structure 340 does not operate, that is, that the drive structure 340 does not operate is currently maintained, that is, currently maintained. That is, in this case, the sealing surface formed by the first end surface 311 and the movable ring 330 or the sealing surface formed by the second end surface 321 and the movable ring 330 can implement sealing.

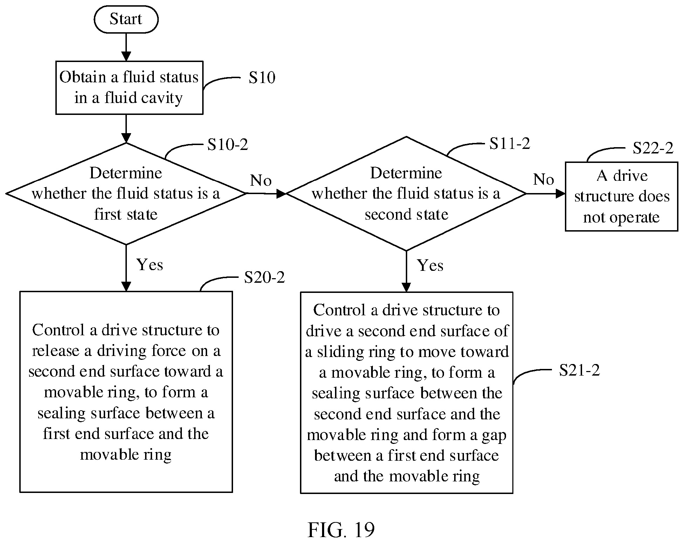

In a possible implementation, when the hardness of the sliding ring 320 is the second hardness, and the hardness of the static ring 310 is the first hardness, the first hardness is less than the second hardness, that is, the hardness of the static ring 310 is less than the hardness of the sliding ring 320. Step S20 includes step S10-2 and step S20-2 (as shown in FIG. 19).

Step S10-2: Determine whether the fluid status is the first state.

Step S20-2: When the fluid status is the first state, control the drive structure 340 to release the driving force on the second end surface 321 toward the movable ring 330, to form the sealing surface between the first end surface 311 and the movable ring 330.

In an implementation, step S20 further includes step S11-2, step S21-2, and step S22-2 (as shown in FIG. 19).

Step S11-2: When the fluid status is not the first state, determine whether the fluid status is the second state.

Step S21-2: When the fluid status is the second state, control the drive structure 340 to drive the second end surface 321 of the sliding ring to move toward the movable ring 330 in the axial direction, to form the sealing surface between the second end surface 321 and the movable ring 330 and form the gap between the first end surface 311 and the movable ring 330.

Step S22-2: When the fluid status is neither the first state nor the second state, the fluid status is the third state, and the drive structure 340 does not operate. That the drive structure 340 does not operate means that the drive structure 340 maintains an original state and does not further operate.

In this implementation, the mechanical sealing method is also applicable to the fluid mechanical device including the foregoing mechanical sealing apparatus. Structures of the mechanical sealing apparatus and the fluid mechanical device are described above, and details are not described herein again.

The mechanical sealing apparatus, the fluid mechanical device, and the mechanical sealing method provided in embodiments of this application are described in detail above. The principle and embodiments of this specification are described herein by using specific examples. The description about embodiments of this application is merely provided to help understand the method and core ideas of this application. In addition, a person of ordinary skill in the art can make variations and modifications to this application in terms of the specific embodiments and application scopes according to the ideas of this application. Therefore, the content of specification shall not be construed as a limit to this application.

## Claims

1. A mechanical sealing apparatus, wherein the mechanical sealing apparatus comprises:
a static ring, comprising a first end surface;
a sliding ring, comprising a second end surface, wherein the sliding ring is disposed inside the static ring or is sleeved outside the static ring in a radial direction of the static ring, the sliding ring and the static ring are fastened in a circumferential direction of the static ring and can move relative to each other in an axial direction of the static ring, and hardnesses of the static ring and the sliding ring are different;
a movable ring, disposed at one end of both of the static ring and the sliding ring in the axial direction, wherein the movable ring elastically presses against the first end surface or the second end surface in the axial direction; and
a drive structure, configured to drive the second end surface to move toward the movable ring in the axial direction, to form a sealing surface between the second end surface and the movable ring and form a gap between the first end surface and the movable ring, wherein when the drive structure releases a driving force on the second end surface toward the movable ring, the first end surface and the movable ring press against each other to form a sealing surface.

2. The mechanical sealing apparatus according to claim 1, wherein a hardness of one of the static ring and the sliding ring is a first hardness, a hardness of the other of the static ring and the sliding ring is a second hardness, the first hardness is less than the second hardness, and a hardness of the movable ring is greater than or equal to the first hardness.

3. The mechanical sealing apparatus according to claim 2, wherein the hardness of the static ring is the first hardness, and the hardness of the sliding ring is the second hardness.

4. The mechanical sealing apparatus according to claim 2, wherein the hardness of the static ring is the second hardness, and the hardness of the sliding ring is the first hardness.

5. The mechanical sealing apparatus according to claim 1, wherein the drive structure presses against or is fixedly connected to one end that is of the sliding ring and that is away from the movable ring.

6. The mechanical sealing apparatus according to claim 1, wherein when the drive structure releases the driving force on the second end surface toward the movable ring, the first end surface is aligned with the second end surface.

7. The mechanical sealing apparatus according to claim 1, wherein the static ring is sleeved on an outer circumferential side of the sliding ring, the mechanical sealing apparatus further comprises a static ring support, and the static ring support is configured to fasten the static ring to an outer circumferential surface of the static ring.

8. The mechanical sealing apparatus according to claim 7, wherein the static ring support comprises a circumferential surface support part and an end surface support part that are connected to each other, the end surface support part is located at one end of the circumferential surface support part, the circumferential surface support part is configured to fasten the static ring to an outer circumferential side of the static ring, the end surface support part covers an end surface that is of the static ring and that is away from the movable ring, and exposes at least a part of an end surface that is of the sliding ring and that is away from the movable ring, and the drive structure is located on an inner circumferential side of the end surface support part, and presses against or is fixedly connected to the end surface that is of the sliding ring and that is away from the movable ring, to drive the sliding ring to move toward the movable ring in the axial direction.

9. The mechanical sealing apparatus according to claim 8, wherein an inner surface of the end surface support part is in a threaded connection to an outer surface of the drive structure.

10. The mechanical sealing apparatus according to claim 1, wherein the sliding ring is sleeved on an outer circumferential side of the static ring, the mechanical sealing apparatus further comprises a static ring support, the static ring support comprises a circumferential surface support part and an end surface support part that are connected to each other, the end surface support part is located at one end of the circumferential surface support part, the circumferential surface support part is located on an outer circumferential side of the sliding ring, the end surface support part is configured to fasten the static ring to an end surface that is of the static ring and that is away from the movable ring, the end surface support part is provided with a through hole that penetrates the end surface support part, and exposes at least a part of an end surface that is of the sliding ring and that is away from the movable ring, and the drive structure passes through the through hole, and presses against or is fixedly connected to the end surface that is of the sliding ring and that is away from the movable ring, to drive the sliding ring to move toward the movable ring in the axial direction.

11. The mechanical sealing apparatus according to claim 1, wherein a first sealing ring is disposed between the static ring and the sliding ring.

12. The mechanical sealing apparatus according to claim 1, wherein the drive structure comprises a drive motor and a sliding ring adjustment rod, the sliding ring adjustment rod is located at one end that is of the sliding ring and that is away from the movable ring, and the drive motor is configured to drive the sliding ring adjustment rod to move in the axial direction, to drive the sliding ring to move toward the movable ring in the axial direction.

13. The mechanical sealing apparatus according to claim 12, wherein the sliding ring adjustment rod is of a hollow structure and is disposed coaxial with the sliding ring, an inner diameter of the sliding ring adjustment rod is greater than or equal to an inner diameter of the sliding ring, and an outer diameter of the sliding ring adjustment rod is less than or equal to an outer diameter of the sliding ring.

14. The mechanical sealing apparatus according to claim 1, wherein the mechanical sealing apparatus further comprises a detection apparatus and a controller, the detection apparatus is configured to detect a fluid status, and the controller controls, based on the fluid status, the drive structure to drive the second end surface of the sliding ring to move toward the movable ring in the axial direction or to release the driving force on the second end surface toward the movable ring.

15. A fluid mechanical device, wherein the fluid mechanical device comprises a fluid cavity, a shaft, and the mechanical sealing apparatus according to any one of claims 1 to 14, the fluid cavity is configured to accommodate a fluid, the shaft is installed in the fluid cavity and extends to an outside of the fluid cavity, the movable ring, the static ring, and the sliding ring are sleeved on the shaft, the movable ring is located in the fluid cavity, and the mechanical sealing apparatus implements sealing between an inside of the fluid cavity and the outside of the fluid cavity by using the sealing surface.

16. The fluid mechanical device according to claim 15, wherein the fluid mechanical device further comprises an impeller and a motor, the impeller is located in the fluid cavity and is fixedly connected to the shaft, the motor is located outside the fluid cavity and is connected to the shaft, the motor is configured to drive the shaft to rotate, and the shaft rotates to drive the impeller to rotate.

17. The fluid mechanical device according to claim 15, wherein the fluid mechanical device is a pump, a centrifuge, a reactor, or a compressor.

18. A mechanical sealing method, applied to the fluid mechanical device according to any one of claims 15 to 17, wherein the mechanical sealing method comprises:
obtaining a fluid status in the fluid cavity, and
controlling, based on the fluid status, the drive structure to drive the second end surface of the sliding ring to move toward the movable ring in the axial direction or to release the driving force on the second end surface toward the movable ring.

19. The mechanical sealing method according to claim 18, wherein when the hardness of the sliding ring is the first hardness, and the hardness of the static ring is the second hardness, the controlling, based on the fluid status, the drive structure to drive the second end surface of the sliding ring to move toward the movable ring in the axial direction or to release the driving force on the second end surface toward the movable ring comprises:
determining whether the fluid status is a first state, wherein the first state is that gas content in the fluid is greater than or equal to a first preset value, and solid content in the fluid is less than a second preset value; and
when the fluid status is the first state, controlling the drive structure to drive the second end surface of the sliding ring to move toward the movable ring in the axial direction, to form the sealing surface between the second end surface and the movable ring and form the gap between the first end surface and the movable ring.

20. The mechanical sealing method according to claim 18, wherein when the hardness of the sliding ring is the first hardness, and the hardness of the static ring is the second hardness, the controlling, based on the fluid status, the drive structure to drive the second end surface of the sliding ring to move toward the movable ring in the axial direction or to release the driving force on the second end surface toward the movable ring comprises:
determining whether the fluid status is a second state, wherein the second state is that solid content in the fluid is greater than or equal to a second preset value, and gas content in the fluid is less than a first preset value; and
when the fluid status is the second state, controlling the drive structure to release the driving force on the second end surface toward the movable ring, to form the sealing surface between the first end surface and the movable ring.
